# EUROPÄISCHE PATENTSCHRIFT

(11) **EP 2 563 154 B1**
(45) Veröffentlichungstag und Bekanntmachung des Hinweises auf die Patenterteilung: **04.10.2017**
(21) Anmeldenummer: 11717226.2
(22) Anmeldetag: 21.04.2011
(51) Int. Cl.: A22C 25/17, A22B 5/16

(54) **VORRICHTUNG UND VERFAHREN ZUM TRENNEN EINER OBERFLÄCHENSCHICHT VON TIERISCHEN NAHRUNGSMITTELPRODUKTEN**
APPARATUS AND METHOD FOR REMOVING A SUPERFICIAL LAYER OF AN ANIMAL FOOD PRODUCT
DISPOSITIF ET PROCÉDÉ DE SEPARATION D'UNE COUCHE SUPERFICIELLE DE PRODUITS ALIMENTAIRES ANIMAUX

(30) Priorität: 27.04.2010 DE 102010018514
(43) Veröffentlichungstag der Anmeldung: 06.03.2013
(73) Patentinhaber: Nordischer Maschinenbau Rud. Baader GmbH + Co. KG, 23560 Lübeck (DE)
(72) Erfinder: GRABAU, Thomas, 23564 Lübeck (DE)
(74) Vertreter: Stork Bamberger Patentanwälte PartmbB
(86) Internationale Anmeldenummer: PCT/EP2011/056428
(87) Internationale Veröffentlichungsnummer: WO 2011/134892

(56) Entgegenhaltungen:
- DE-A1- 4 025 600
- DE-A1- 10 123 811
- DE-A1- 19 739 618
- DE-U1- 8 712 573
- US-A- 3 504 721

## Beschreibung

Die Erfindung betrifft eine Vorrichtung zum Trennen einer Oberflächenschicht von in Produktlaufrichtung der Vorrichtung förderbaren tierischen Nahrungsmittelprodukten, umfassend ein Gestell, eine angetriebene, eine strukturierte, kreiszylindrische Walzenmantelfläche aufweisende Mitnehmerwalze, die um eine quer zur Produktlaufrichtung über die Arbeitsbreite der Vorrichtung in Vorrichtungsquerrichtung sich erstreckende Walzendrehachse drehbar ist, umfassend eine der Mitnehmerwalze gegenüberstehende Messereinrichtung mit einem ein Trennmesser haltenden Messerhalter-Andrückkörper, der sich mit der Mitnehmerwalze über deren Zenitbereich und, in Produktlaufrichtung der Mitnehmerwalze betrachtet, in dem hinter der Mitnehmerwalze liegenden Raum erstreckt, der eine der Walzenmantelfläche entsprechende konkave Andrückfläche aufweist und der um eine sich in der Vorrichtungsquerrichtung erstreckende Andrückkörper-Schwenkachse schwenkbar ist, und umfassend eine Andrückkraft auf den Messerhalter-Andrückkörper ausübende Andrückeinrichtung, wobei die Walzenmantelfläche und die Andrückkörper-Andrückfläche einen die durch das Trennmesser abgetrennte Oberflächenschicht transportierenden, im Arbeitsbetrieb selbsttätig veränderbaren Zugspalt bilden, der einen Zugspalt-Einlaufbereich und einen Zugspalt-Auslaufbereich aufweist, wobei der Zugspalt gegen die auf den Messerhalter-Andrückkörper ausgeübte Andrückkraft in dem Zugspalt-Einlaufbereich entsprechend der Dicke der eingezogenen Oberflächenschicht selbsttätig geweitet wird. Die Erfindung bezieht sich auch auf ein Verfahren zum automatischen Trennen einer Oberflächenschicht von geförderten tierischen Nahrungsmittelprodukten durch Abtrennen der Oberflächenschicht mittels eines Trennmessers und Einziehen und Fördern der abgetrennten Oberflächenschicht mittels Zugspalt, der zwischen einer angetriebenen Mitnehmerwalze und einem das Trennmesser haltenden, zur Bildung des Zugspalts in Richtung auf die Mitnehmerwalze gedrückten Messerhalter-Andrückkörper ausgebildet wird.

Vorrichtungen mit den genannten und ähnlichen Konstruktionsmerkmalen sind bekannt. Von besonderer Bedeutung ist es, dass beim vollautomatischen Betrieb der Vorrichtung besonders dünne Oberflächenschichten zuverlässig abgetrennt werden. Bei derartigen dünnen Oberflächenschichten, die von tierischem Muskelgewebe abgetragen werden, handelt es sich insbesondere um Haut einschließende Schichten der Filets von Fischen. Es kommt darauf an, dass sich der angedrückte Messerhalter-Andrückkörper beim Einlaufen in den Zugspalt unverzüglich selbsttätig auf die abgetrennte Oberflächenschicht einstellt. Dieses schnelle Ansprechverhalten des Messerhalter-Andrückkörpers muss einhergehen mit zuverlässigem sicherem Erfassen der in den Zugspalt einlaufenden Oberflächenschicht. Insbesondere bei dünnen Oberflächenschichten kommt der Mitnahmegriffigkeit der Mitnehmerwalze, also deren Oberflächenstruktur, besondere Bedeutung zu. Die Walzenmantelfläche ist zumeist durch eine Zahnung gebildet, deren Profil empfindlich von insbesondere dünner, zu erfassender Oberflächenschicht abhängt. Die Ausprägung der Profile hängt von einer Reihe von Faktoren, zum Beispiel Produktionsgeschwindigkeit, Oberflächenschichtkonsistenz und Art des Muskelgewebes ab.

Bekannte Vorrichtungen und Verfahren zielen darauf ab, dass beim ersten Erfassen der Oberflächenschicht der Zugspalt im Einlaufbereich schneller als im Auslaufbereich geöffnet wird oder aber, auch in umgekehrter Reihenfolge, die Öffnung des Zugspalts in seinem Auslaufbereich schneller als in seinem Einlaufbereich von statten geht. Bekannten Systemen ist gemeinsam, dass Anlenkachsen, über die der Messerhalter-Andrückkörper angelenkt wird, sowohl zu Betriebsbeginn, als auch im anschließenden Arbeitsbetrieb unter Wirkung von Spannkräften stehen, die die Schwenkanlenkung besonders beeinflussen und sich infolgedessen nur eingeschränkt kinematisch auf die Beschaffenheit der zu erfassenden und durch den Zugspalt zu transportierenden Oberflächenschicht einstellen können. Infolge ungleichen Öffnens durch Erweitern des Zugspalts über seinen gesamten Einlauf- und Auslaufbereich und einer Anlenkung des Messerhalter-Andrückkörpers mittels gestellfester oder in vorgespannter Position gehaltener Schwenkachsen bleibt das Erfassen von in den Zugspalt einlaufender Oberflächenschicht unbefriedigend und in besonderem Maß von der Walzenmantelfläche der Mitnehmerwalze abhängig, die Geschwindigkeit des Ansprechverhaltens des Messerhalter-Andrückkörpers bleibt infolge von Massenträgheitsmomenten relativ gering, und im Arbeitsbetrieb steht eine Schwenkanlenkung mit vorgespannten Schwenkachsen einem Andrückkraft vergleichmäßigenden Transport der Oberflächenschicht durch den Zugspalt entgegen. Im Übrigen hat sich herausgestellt, dass in einem Zugspalt, der konstant gehalten wird, die Flächenpressung infolge von auf den Messerhalter-Andrückkörper ausgeübter Andrückkraft unerwünscht unregelmäßig bleibt und es beim Transport zu Schlupf kommen kann, dem man versucht, durch besondere Strukturen der Walzenmantelfläche der Mitnehmerwalze zu begegnen.

Zum Beispiel ist aus DE 40 25 600 A eine Vorrichtung bekannt, die eingangs genannte Merkmale insoweit aufweist, als ausgehend von einer unter der Wirkung einer Anschnittfeder gehaltenen Anschnittstellung anschließend nur beim Einziehen einer Schwarte in den Zugspalt sich dieser an die Schwartendicke anpasst. Mit dem Einziehen der Schwarte geht einher, dass der Messerhalter-Andrückkörper unter der Wirkung der Anschnittfeder von der Mitnehmerwalze weg in den hinter dieser liegenden Raum verlagert wird, bis der Messerhalter-Andrückkörper über Tragarme gegen einen stationären Endanschlag anschlägt. In der Anschlagsposition befindet sich die Vorrichtung in einer Arbeitsstellung derart, dass sich das Trennmesser des Messerhalters nicht tangential zur Mitnehmerwalte verschieben kann. Der Messerhalter-Andrückkörper wird stets über die Tragarme mittels einer rückwärtigen, in Lagerausnehmungen gefangenen Welle schwenkbar angelenkt. Die Lagerausnehmungen sind an Hebelarmen angeordnet, die unter der Wirkung der Anschnittfeder geschwenkt werden.

Eine andere aus DE 197 39 618 A1 bekannte Vorrichtung weist die eingangs genannten Merkmale mit dem Unterschied auf, dass der Zugspalt nicht nur durch einen Spalt zwischen der Mitnehmerwalze und dem Messerhalter-Andrückkörper, sondern zusätzlich durch einen Auslaufspalt zwischen einer Steuerleiste und der Walze gebildet ist. Der Messerhalter-Andrückkörper ist über Bolzen angelenkt, die an der Steuerleiste angeordnet sind und eine rückwärtige Schwenkachse bilden. Die Bolzen sind in Führungsnuten des Messerhalter-Andrückkörpers gelagert und gefangen. Beim Einlaufen sowie Durchlaufen von Haut oder Schwarte im Spalt wird die Steuerleiste geschwenkt, wobei ein Keilbereich zwischen der Steuerleiste und der Walze kleiner wird. Zugleich wird der über die Bolzen mit Zwangsführung angelenkte Messerhalter-Andrückkörper bei vollständig eingezogener Haut bzw. Schwarte so geschwenkt, dass das Messer des Andrückkörpers zusätzlich gegen die Walze gedrückt wird.

Demgegenüber liegen der Erfindung die Ziele zugrunde, ein relativ einfaches mechanisches System und Verfahren zu finden, das im automatischen Vorrichtungsbetrieb das selbsttätige Aufnehmen insbesondere dünner Oberflächenschichten in den Zugspalt hinsichtlich des Erfassens der Oberflächenschicht, eines momentenreduzierten Ansprechens des Messerträger-Andrückkörpers und der Andrückverhältnisse sowie auch kraftschlüssige Mitnahme in vollständig mit Oberflächenschicht gefülltem Zugspalt verbessert.

Die Ziele der Erfindung werden in Verbindung mit den Merkmalen der eingangsgenannten Vorrichtung gemäss Anspruch 1 dadurch erreicht, dass die Andrückkörper-Schwenkachse als rückwärtige Schwenkachse an der der Mitnehmerwalze in Vorrichtungslängsrichtung abgewandten Seite des Messerhalter-Andrückkörpers eingerichtet ist und dass die Vorrichtung eine den Messerhalter-Andrückkörper aus einer definierten Anfangsposition selbsttätig verlagernde Andrückkörper-Führungseinrichtung aufweist, mit der die rückwärtige Schwenkachse des Messerhalter-Andrückkörpers, in Arbeitsdrehrichtung der Mitnehmerwalze betrachtet, im Raumbereich hinter dem Trennmesser derart angeordnet und selbsttätig verlagerbar ist, dass bei durch Einzug der Oberflächenschicht gegen die Andrückkraft aufschwenkendem Messerhalter-Andrückkörper der Zugspalt im Einlaufbereich weiter und im Auslaufbereich enger wird und der Messerhalter-Andrückkörper in Richtung gegen die Andrückkraft frei ausweichlich gehalten ist, so dass entlang des Zugspalts eine schwimmbewegliche Anlage an die im Arbeitsbetrieb vollständig eingezogene Oberflächenschicht unter Ausbildung eines Prozesswinkelbereichs mit Andrückkraft vergleichmäßigender, sich auf die Dicke der Oberflächenschicht selbsttätig anpassender Spaltgröße entsteht. Die Führungseinrichtung ist so eingerichtet, dass der Messerhalter-Andrückkörper bei schwimmbeweglicher Anlage an die vollständig in den Zugspalt eingezogene Oberflächenschicht ohne Kontakt mit einer Führungsbahn gehalten ist, mittels der beim Aufschwenken des Messerhalter-Andrückkörpers aus seiner Anfangsposition die rückwärtige Andrückkörper-Schwenkachse geführt verlagerbar ist. Erfindungsgemäße Ziele werden unter Verwendung einer erfindungsgemäßen Vorrichtung gemäss Anspruch 22 in Verbindung mit den Merkmalen des eingangsgenannten Verfahrens dadurch erreicht, dass zunächst der Messerhalter-Andrückkörper in eine definierte Anfangsposition zum Einstellen einer vorgegebenen festen Anfangsgröße des Zugspalts gebracht wird, dass anschließend der Messerhalter-Andrückkörper selbsttätig um eine verlagerbare, an der Mitnehmerwalze abgewandten Seite des Messerhalter-Andrückkörpers eingerichtete rückwärtige Schwenkachse des Messerhalter-Andrückkörpers durch Einführen der abgetrennten Oberflächenschicht in den Zugspalt derart aufgeschwenkt wird, dass zugleich ein Einlaufbereich des Zugspalts geweitet und ein Auslaufbereich des Zugspalts verengt wird, wobei die rückwärtige Schwenkachse des Messerhalter-Andrückkörpers, betrachtet in Arbeitsdrehrichtung der Mitnehmerwalze, in einem Bereich hinter dem Zenit der Mitnehmerwalze zu dieser hin selbsttätig und geführt verlagert wird, und dass der Messerhalter-Andrückkörper mit vollständigem Einzug der abgetrennten Oberflächenschicht in den Zugspalt in schwimmender, ausweichlicher Arbeitsposition zum selbsttätigen Herstellen und Aufrechterhalten einer Andrückkraft vergleichmäßigenden Größe des Zugspalts nach selbsttätiger Aufhebung der Schwenkposition und -funktion der verlagerten rückwärtigen Andrückkörper-Schwenkachse gehalten wird.

Mit den erfindungsgemäßen Maßnahmen erreicht man eine Reihe von Vorteilen. Es ist wesentlich, dass der Zugspalt im Einlaufbereich durch selbsttätiges Aufschwenken mittels eintreffender Oberflächenschicht weiter und im Auslaufbereich enger wird. Obwohl der Einlauf der Oberflächenschicht in den Zugspalt durch selbsttätiges Aufschwenken begünstigt wird, wird auch die sichere Mitnahme der Oberflächenschicht an der Mantelfläche der Mitnehmerwalze durch zeitgleiche Verengung im Auslaufbereich erreicht. Erfindungsgemäß ist es auch wesentlich, dass bei vollständig eingezogener Oberflächenschicht die schwimmbewegliche Anlage des Messerhalter-Andrückkörpers eingerichtet ist. Diese besondere Anlage ist erfindungsgemäß dadurch erzielt, dass der Messerhalter-Andrückkörper auf die transportierte Oberflächenschicht aufschwimmt, indem die rückwärtige Schwenkanlenkung verlassen und aufgehoben wird, wobei er in Richtung gegen Andrückkraft ohne Zwangsanlenkung oder -führung frei ausweichlich gehalten ist. Man erreicht in dem Prozessbereich, der durch den Einlaufbereich und wenigstens einen Teil des Auslaufbereichs bestimmt ist, eine die Flächenpressung vergleichmäßigende Spaltgröße, und zwar ohne Beeinträchtigung von zwangsweiser Anlenkung an starren, gestellfesten oder unter Vorspannung gehaltenen Schwenkachsen. Dadurch sind auch der mechanische Aufbau und die Kinematik des Systems vereinfacht. Sämtliche Punkte oder Schwenkachsen, über die der Messerhalter-Andrückkörper angelenkt oder gelagert wird, bleiben in der Anfangsphase des Anschneidens sowie im daran stetig anschließenden Betrieb in besonderem Maß räumlich bewegbar. Der frei ausweichliche Messerhalter-Andrückkörper unterliegt allein der von den Anlenkungen fern gehaltenen Andrückkraft. Die geführte Verlagerung der rückwärtigen Schwenkachse des Messerhalter-Andrückkörpers ist derart, dass diese Führung entfällt, wenn das anfängliche Aufschwenken des Messerhalter-Andrückkörpers beendet ist und das System in den anschließenden Arbeitsbetrieb gelangt. Die Anordnung der rückwärtigen Schwenkachse des Messerhalter-Andrückkörpers, in Arbeitsdrehrichtung der Mitnehmerwalze betrachtet, im Raumbereich hinter dem Trennmesser bewirkt, dass die rückwärtige Schwenkachse weitgehend an den Schwerpunkt des Messerhalter-Andrückkörpers herangebracht wird. Dadurch wird das Trägheitsmoment beim Aufschwenken, nämlich der sogenannte Steiner Anteil gemäß dem Steinerschen Satz reduziert.

Vorteilhaft umfasst die Andrückkörper-Führungseinrichtung eine an dem Vorrichtungsgestell festgelegte Lenkeinrichtung, die den Messerhalter-Andrückkörper derart anlenkt, dass er, ausgehend von seiner Anfangsposition, beim durch Einlauf der abgetrennten Oberflächenschicht in den Zugspalt bewirkten selbsttätigen Aufschwenken um die rückwärtige Schwenkachse mit dieser in Längsrichtung der Vorrichtung zur Mitnehmerwalze hin begrenzt verlagerbar ist. Um die schwimmbewegliche Anlage weiter zu verbessern, lenkt die Lenkeinrichtung den Messerhalter-Andrückkörper zweckmäßig mittels wenigstens eines dreidimensionalen Raumgelenks an. Ein solches Raumgelenk wird zum Beispiel durch ein Kugelgelenk gebildet. Durch die selbsttätige, geführte Verschiebung der rückwärtigen Andrückkörper-Schwenkachse in Richtung auf die Mitnehmerwalze wird die Verengung des Zugspalts im Auslaufbereich in besonderem Maß herbeigeführt. Man erreicht, dass, ausgehend von der Anfangsposition des Messerhalter-Andrückkörpers, eine Übergangsstelle zwischen Einlaufbereich und Auslaufbereich des Zugspalts, zu dem Zenit der Mitnehmerwalze hin wandert, so dass das Erfassen der Oberflächenschicht in dynamisch sich veränderndem Zugspalt stattfindet. Eine besonders einfache mechanische Verwirklichung besteht darin, dass die Lenkeinrichtung wenigstens einen Längslenker umfasst, der sich längsverstellbar in Vorrichtungslänge erstreckt und um eine sich in Vorrichtungsquerrichtung erstreckende Lenker-Schwenkachse frei schwenkbar angelenkt ist, wobei der Längslenkerkopf zweckmäßig mittels eines Raumgelenks mit dem Messerhalter-Andrückkörper verbunden ist. Der Längslenker ist dann so angeordnet, dass, im Zustand der Anfangsposition des Messerhalter-Andrückkörpers, die Längslenker-Schwenkachse, das Raumgelenk und die verlagerbare Andrückkörper-Schwenkachse Eckpunkte eines gedachten, an dem Raumgelenk stumpfwinkligen Gelenkedreiecks sind, das so eingerichtet ist, dass, ausgehend von der Anfangsposition des Messerhalter-Andrückkörpers, beim durch Einlauf der abgetrennten Oberflächenschicht in den Zugspalt bewirkten selbsttätigen Aufschwenken des Messerhalter-Andrückkörpers um die verlagerbare rückwärtige Andrückkörper-Schwenkachse der zur Mitnehmerwalze offene stumpfe Winkel des Gelenkedreiecks bis zu einem begrenzenden Winkelanschlag zwischen dem Längslenker und dem Messerhalter-Andrückkörper kleiner wird.

Hinsichtlich besonderer Vergleichmäßigung der Flächenpressung besteht eine besondere Gestaltung darin, dass die Andrückeinrichtung so angeordnet und ausgebildet ist, dass sie den Messerhalter-Andrückkörper in Längsrichtung der Vorrichtung betrachtet, in einem Bereich mit Andrückkraft beaufschlagt, der von der verlagerbaren rückwärtigen Schwenkachse des Messerhalter-Andrückkörpers weiter als von dem Trennmesser des Messerhalter-Andrückkörpers distanziert ist.

Gemäß bevorzugter, mechanisch besonders einfacher Einrichtung umfasst die Andrückkörper-Führungseinrichtung eine Linearführung, die wenigstens eine die verlagerbare rückwärtige Schwenkachse des Messerhalter-Andrückkörpers in Vorrichtungslänge linear verlagernde Führungsbahn bildet. Vorteilhaft ist die Linearführung zumindest im Wesentlichen parallel zur Zenitebene des dem Trennmesser zugeordneten Walzenscheitels der Mitnehmerwalze gerichtet, und die Andrückeinrichtung ist so eingerichtet, dass der Messerhalter-Andrückkörper zumindest im Wesentlichen senkrecht zu der Zenitebene mit Andrückkraft beaufschlagt wird.

Eine weitere Ausgestaltung besteht darin, dass die Vorrichtung eine Zugspalt-Einstelleinrichtung umfasst, mit der eine die Anfangsposition des Messerhalter-Andrückkörpers definierende wählbare feste Anfangsgröße des Zugspalts einstellbar ist, wobei die Zugspalt-Einstelleinrichtung zweckmäßig wenigstens ein Auslauf-Zugspalteinstellelement umfasst, das an dem Vorrichtungsgestellt abgestützt ist, wobei es eine Grenzlage des Messerhalter-Andrückkörpers zur Bildung der Anfangsgröße des Zugspalts in seinem Auslaufbereich bestimmt. Eine bevorzugte Einrichtung besteht darin, dass das wenigstens eine Auslauf-Zugspalteinstellelement die rückwärtige Schwenkachsen-Schwenkanlenkung des Messerhalter-Andrückkörpers bildet, wobei es schwenkbewegbar an einer gestellfesten Führungsbahn der Andrückkörper-Führungseinrichtung abgestützt ist.

Um Freiheitsgrade zur Grundeinstellung, nämlich zum Einstellen der Anfangsposition besonders zu optimieren, umfasst die Zugspalt-Einstelleinrichtung auch wenigstens ein Einlauf-Zugspalteinstellelement, das an dem Vorrichtungsgestellt abgestützt ist, wobei es eine Grenzlage des Messerhalter-Andrückkörpers zur Bildung der Anfangsgröße des Zugspalts in seinem Einlaufbereich bestimmt. Nach einer Ausgestaltung umfasst die Zugspalt-Einstelleinrichtung eine Vierpunkt-Einstellung, wobei an beiden Längsenden des Messerhalter-Andrückkörpers jeweils zwei Zugspalt-Einstellelemente angeordnet sind, wobei jeweils ein in Bezug auf die Arbeitsdrehrichtung der Mitnehmerwalze vorderes Einlauf-Zugspaltelement die Anfangsgröße des Zugspalts in seinem Einlaufbereich und ein in Bezug auf die Arbeitsdrehrichtung der Mitnehmerwalze hinteres Auslauf-Zugspaltelement die Anfangsgröße des Zugspalts in seinem Auslaufbereich bestimmt. Vorteilhaft werden an dem Messerhalter-Andrückkörper angeordnete Zugspalt-Einstellelemente der Zugspalt-Einstelleinrichtung entlang einer linearen Führungsbahn der Andrückkörper-Führungseinrichtung linear verschiebbar geführt und daran zum Einstellen der Anfangsgröße des Zugspalts einstellbar abgestützt.

Nach einer bevorzugten Ausgestaltung ist die rückwärtige Schwenkachse des Messerhalter-Andrückkörpers durch zwei Lageelemente bestimmt, die an jedem Längsende des Messerhalter-Andrückkörpers derart angeordnet sind, dass sie mit jeweils einer zugeordneten Führung der Andrückkörper-Führungseinrichtung zum selbsttätigen Verlagern des Messerhalter-Andrückkörpers zusammenwirken und im Arbeitsbetrieb außer Eingriff mit der Führung gelangen.

Zweckmäßig ist die verlagerbare rückwärtige Schwenkachse des Messerhalter-Andrückkörpers, ausgehend von dem dem Trennmesser zugeordneten Zenit der Mitnehmerwalze und in deren Arbeitsdrehung betrachtet, in einem Raumwinkelbereich von 0° bis 80° angeordnet. Bevorzugt wird die Anordnung in einem Raumwinkelbereich von 0° bis 70°.

Hinsichtlich eines besonders langen Transportwegs im Zugspalt ist der Messerhalter-Andrückkörper im die Form seiner Andrückfläche bestimmenden Profilquerschnitt so gestaltet, dass im Zustand der Anfangsposition des Messerhalter-Andrückkörpers die Lage einer Übergangsstelle, an der der Zugspalt-Einlaufbereich in den Zugspalt-Auslaufbereich übergeht, durch den kleinsten Abstand der Andrückkörper-Andrückfläche von der verlagerbaren Andrückkörper-Schwenkachse bestimmt ist.

Um am Auslaufende des Auslaufbereichs eine besondere Ausmündung vorzusehen, kann zweckmäßig die sich im Zugspalt-Auslaufbereich erstreckende Andrückfläche des Messerhalter-Andrückkörpers an oder, in Arbeitsdrehrichtung der Mitnehmerwalze betrachtet, hinter der Übergangsstelle in eine zur konkaven Andrückfläche des Messerhalter-Andrückkörpers tangentiale Fläche übergehen. Bevorzugte Anordnungen und Gestaltungen bestehen darin, dass im Zustand der Anfangsposition des Messerhalter-Andrückkörpers der Abstand der Übergangsstelle von der verlagerbaren rückwärtigen Andrückkörper-Schwenkachse einen Wert aus dem von ca. 0,5 bis 1,5-fachen des Radius der Mitnehmerwalze aufweist. Vorteilhaft liegt die Übergangsstelle zwischen dem Zugspalt-Einlaufbereich und dem Zugspalt-Auslaufbereich, ausgehend von dem dem Trennmesser zugeordneten Zenit der Mitnehmerwalze und in deren Arbeitsdrehrichtung betrachtet, im Raumwinkelbereich von 0° bis 80°.

Hinsichtlich des erfindungsgemäßen Verfahrens wird die selbsttätige Verlagerung der rückwärtigen Andrückkörper-Schwenkachse zu der Mitnehmerwalze hin besonders einfach durch Überlagerung von durch zwei Schwenkanlenkungen des Messerhalter-Andrückkörpers erzeugte Schwenkbewegungen bewirkt, wobei die eine Schwenkbewegung durch Schwenken des Messerhalter-Andrückkörpers um die sich verlagernde rückwärtige Schwenkachse ausgeführt wird und die andere Schwenkbewegung durch Schwenken des Messerhalter-Andrückkörpers mittels eines Schwenkgelenks erfolgt, das zwischen einer der Mitnehmerwalze zugewandten vorderseitigen Seite der Mitnehmerwalze und dem kopfseitigen Ende eines Lenkarms angeordnet ist, der um eine gestellfeste, mit der Drehachse der Mitnehmerwalze parallele Lenkerschwenkachse schwenkbar ist.

In besonders bevorzugter Weise wird das Verfahren dadurch ausgeführt, dass durch selbsttätige Verstellung ein der Mitnehmerwalze mit Winkelöffnung zugewandter stumpfer Gelenkwinkel, unter dem der Messerhalter-Andrückkörper an dem Lenkarm beim Schwenken um die rückwärtige sich verlagernde Schwenkachse angelenkt ist, verkleinert wird, um die Verlagerung der rückwärtigen Schwenkachse zur Mitnehmerwalze hin zu bewirken. Nach einer verfahrensgemäßen Ausgestaltung wird das Schwenken des Messerhalter-Andrückkörpers um die rückwärtige, sich verlagernde Schwenkachse durch einen vorgegebenen Anschlag begrenzt, der das Verkleinern des stumpfen Winkels begrenzt, wodurch der Messerhalter-Andrückkörper in eine gegen die in den Zugspalt eingezogene Oberflächenschicht angedrückte schwimmende, ausweichliche Position gelangt, in der die rückwärtige Schwenkachse wirkungslos wird.

Vorteilhaft wird die sich verlagernde, rückwärtige Andrückkörper-Schwenkachse linear geführt auf die Mitnehmerwalze hin verlagert.

Auf die genannten und noch andere zweckmäßige und vorteilhafte Ausgestaltungen der Erfindung sind Unteransprüche gerichtet. Merkmale der Ausgestaltungen führen in jeder Kombination zu der erfindungsgemäßen wesentlichen Lösung, so dass diese nicht auf konkret beschriebene Ausführungsbeispiele eingeschränkt ist, sondern auch wesentliche Einzelmaßnahmen insbesondere der Ausführungsbeispiele ohne die Gesamtheit der Merkmale beschriebener Ausgestaltungen in Unterkombination schutzbegründend sind. Jedes Teilmerkmal eines Ausführungsbeispiels ist als Teilmerkmal weiterer, nicht dargestellter Ausgestaltungen zu verstehen. Lediglich besonders zweckmäßige und vorteilhafte Ausbildungsformen und -möglichkeiten der Erfindung werden anhand der folgenden Beschreibung der in der schematischen Zeichnung dargestellten Ausführungsbeispiele näher beschrieben.

Es zeigen
- Fig. 1 und 2: in Längsansicht und Draufsicht eine erfindungsgemäße Vorrichtung im Ausführungsbeispiel,
- Fig. 3: im Ausschnitt aus Fig. 1 den Zustand der Vorrichtung in einer Andrückkörper-Anfangsposition,
- Fig. 4 bis 6: eine Andrückkörper-Position in der Phase des Anschneidens und Einlaufens einer Oberflächenschicht in einen Prozessspalt und
- Fig. 7: eine Andrückkörper-Position in der Phase eines vollständig mit Oberflächenschicht gefüllten Prozessspalts.

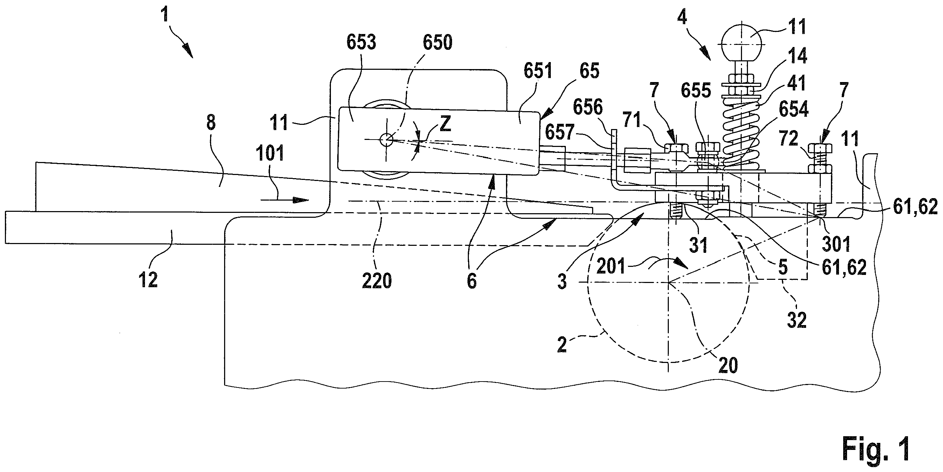

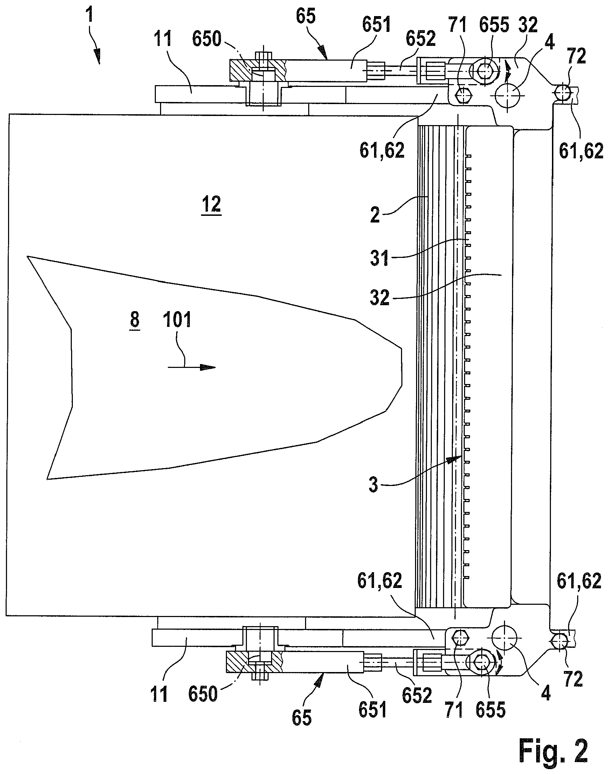

In Fig. 1 und 2 ist eine erfindungsgemäße Vorrichtung 1 mit ihren für die Erfindung wesentlichen Teilen dargestellt, während sie im Übrigen übliche Komponenten umfasst. Im Ausführungsbeispiel handelt es sich um eine automatisch arbeitende Maschine zum Enthäuten von Fischfilets als Nahrungsmittelprodukte 8, die in einer nicht dargestellten Beschickstation aufgegeben werden und Schwanz voraus auf einem Tisch 12 in Produktlaufrichtung 101 zum Enthäuten gegen ein Trennmesser 31 in Form einer Messerschneide geführt werden. Förderung mit Kopf voraus ist ebenso möglich.

Die Vorrichtung 1 umfasst ein Gestell 11, eine Mitnehmerwalze 2, eine dieser gegenüberstehende Messereinrichtung 3, eine Andrückeinrichtung 4, eine Führungseinrichtung 6 sowie eine Zugspalt-Einstelleinrichtung 7. Die Mitnehmerwalze 2 ist um eine quer zur Produktlaufrichtung 101 über die Arbeitsbreite der Vorrichtung in Vorrichtungsquerrichtung sich erstreckende gestellfeste Walzendrehachse 20 drehbar gelagert. Die Mitnehmerwalze 2 wird mittels eines nicht dargestellten Drehantriebs gedreht.

Die Messereinrichtung 3 umfasst einen zusammen mit dem Trennmesser 31 ausgebildeten Messerhalter-Andrückkörper 32, der sich mit der Mitnehmerwalze 2 über deren Zenitbereich und, in Arbeitsdrehrichtung 201 der Mitnehmerwalze 2 betrachtet, in dem hinter der Mitnehmerwalze 2 liegenden Raum erstreckt.

In Fig. 1, 2 und 3 befindet sich der Messerhalter-Andrückkörper 32 in einer definierten Anfangs- oder Grundposition 300. Diese ist im Ausführungsbeispiel dadurch bestimmt, dass zwischen strukturierter, kreiszylindrischer Walzenmantelfläche 21 und einer entsprechenden zylindrischen konkaven Andrückkörper-Andrückfläche 321 ein Zugspalt 5 mit zumindest im Wesentlichen gleicher Spaltgröße ausgebildet ist. In dieser Position sind die Walzenmantelfläche 21 und die entsprechende Andrückkörper-Andrückflache 321 konzentrisch zu der Walzendrehachse 20.

Der Messerhalter-Andrückkörper 32 ist in besonderer Weise angeordnet, ausgerichtet und gelagert. In Profilansicht weist er einen der Mitnehmerwalze 2 abgewandten rückwärtigen Teil und einen der Mitnehmerwalze 2 zugewandten, mit der Messerschneide bis in den Bereich des Walzenzenits 22 reichenden, mit diesem sich erstreckenden vorderseitigen Teil auf. In der Anfangsposition 300 befinden sich an den Längsenden des Messerhalter-Andrückkörpers 32 Endseitenteile des Messerhalter-Andrückkörpers 32 in horizontaler Lage, die parallel mit der Zenitebene 220 der Mitnehmerwalze 2 liegt.

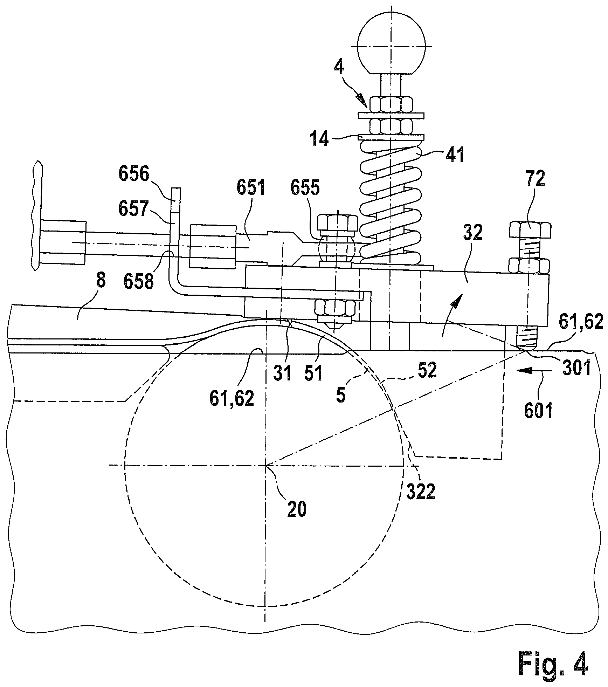

Die Anfangsposition 300 wird mittels der Zugspalt-Einstelleinrichtung 7 eingerichtet und eingestellt, die auch Bestandteile der Führungseinrichtung 6 aufweist. An den beiden Längsseiten der Vorrichtung 1 sind im Bereich der Längsenden des Messerhalter-Andrückkörpers 32 mit der Zenitebene 220 gestellfeste parallele Führungsflächen ausgebildet, die Führungsbahnen 61 einer Linearführung 62 der Führungseinrichtung 6 bilden. Jedes Endseitenteil des Messerhalter-Andrückkörpers 32 ist mit zwei Einstellschrauben ausgestattet, so dass vier einstellbare Füße gebildet sind, mit denen der Messerhalter-Andrückkörper 32 auf den horizontalen Führungsbahnen 61 lose aufgesetzt ist. Die Einstellfüße bilden vorderseitige bzw. rückwärtige Zugspalt-Einstellelemente 71, 72. Mittels der vorderseitigen Zugspalt-Einstellelemente 71 ist die Anfangs-Spaltgröße des Messerhalter-Andrückkörpers 32 im Einlaufbereich 51 des Zugspalts 5 einstellbar. Die rückwärtigen Zugspalt-Einstellelemente 72 distanzieren den Messerhalter-Andrückkörper 32 von der Mitnehmerwalze 2 mit einem Einstellmaß, das die Spaltgröße im Auslaufbereich 52 des Zugspalts 5 in der Anfangsposition 300 bestimmt. In Fig. 4 bis 7 sind die vorderseitigen Zugspalt-Einstellelemente 71 zur Vereinfachung der Zeichnung nicht dargestellt. Aufgrund der erfindungsgemäßen Einrichtung erfolgt die Einstellung des Zugspalts 5 allein gegen die Andrückkraft der Andrückeinrichtung 4.

Im Ausführungsbeispiel liegen die Führungsbahnen 61 unterhalb der Zenitebene 220, aber dennoch in derem Höhenbereich. Entsprechend befindet sich die verlagerbare rückwärtige Andrückkörper-Schwenkachse 301 in einem oberen, der Zenitebene 220 nahen Bereich, wobei sich die rückwärtige Andrückkörper-Schwenkachse 301 in einer Distanz zum Schwerpunkt des Messerhalter-Andrückkörpers 32 befindet, die klein gehalten ist, um beim Aufschwenken um die verlagerbare rückwärtige Andrückkörper-Schwenkachse 301 den sogenannten Steiner-Anteil des Trägheitsmoments des Messerhalter-Andrückkörpers 32 gering zu halten.

Der Messerhalter-Andrückkörper 32 ist vorderseitig über Raumgelenkverbindungen frei schwenkbar mittels der Lenkeinrichtung 65 angelenkt. Diese umfasst zwei Längslenker 651, die fußseitig um eine gestellfeste Lenkerschwenkachse 650, die sich parallel mit der Walzendrehachse 20 erstreckt, angelenkt sind. Die Längslenker 651 weisen an ihren kopfseitigen Enden jeweils ein durch ein Kugelgelenk gebildetes Raumgelenk 655 auf, das den Messerhalter-Andrückkörper 32 jeweils vorderseitig an seinen Längsenden anlenkt. Die Längslenker 651 sind als sich lang erstreckende Lenkarme mit längenverstellbaren Zugstangen 652 ausgeführt und jeweils um die Lenkerschwenkachse 650 frei schwenkbeweglich. Die Lenkerschwenkachse 650 ist in relativ großem Abstand von der Mitnehmerwalze 2, in Produktlaufrichtung 101, vor dieser und oberhalb der Zenitebene 220 angeordnet. Allgemein ist darauf abgezielt, dass sich die Längslenker 651 in der Anfangsposition 300 unter weitgehend flachem Winkel z erstrecken.

Die Andrückeinrichtung 4 umfasst zur Zenitebene 220 senkrecht ausgerichtete Schraubenzylinder-Druckfedern 41, die jeweils zwischen die Längsenden des Messerhalter-Andrückkörpers 32 und zur Abstützung gestellfeste Lagerstellen 14 gespannt sind.

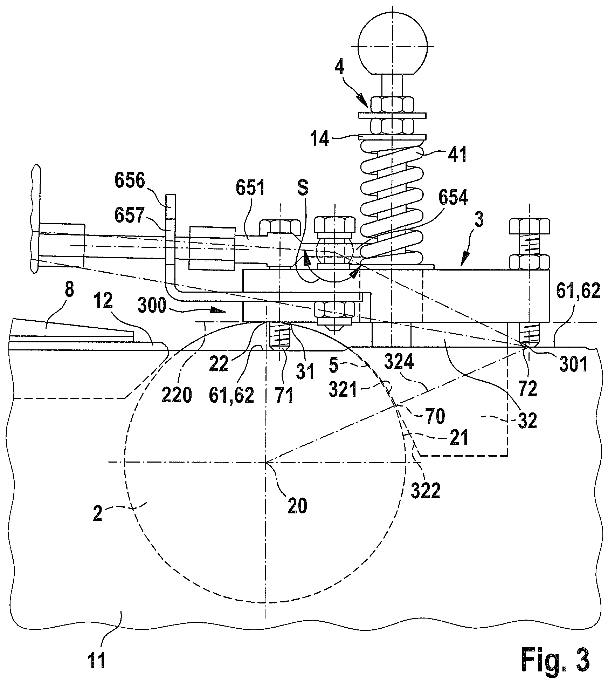

Die rückwärtigen Auslauf-Zugspalteinstellelemente 72 sind Schwenklagerelemente, die an ihren auf den linearen Führungsbahnen 61 aufstehenden Fußenden eine längs der Führungsbahnen 61 in Richtung auf den Zenitbereich der Mitnehmerwalze 2 verlagerbare rückwärtige Schwenkachse 301 des Messerhalter-Andrückkörpers 32 bilden, die sich in Vorrichtungsquerrichtung erstreckt. Die Längslenker-Schwenkachse 650, das Raumgelenk 655 und die verlagerbare Andrückkörper-Schwenkachse 301 bilden Eckpunkte eines gedachten, strichpunktiert in Fig. 1 und 3 eingetragenen Gelenkedreiecks mit an dem Raumgelenk 655 stumpfem, zur Mitnehmerwalze 2 offenem Winkel s. Man erkennt, dass mit den Gelenken und ihrer Anordnungsgeometrie erreicht ist, dass sich der Winkel s verkleinert, wenn die Raumgelenke 655 bei Hochschwenken der Längslenker 651 gehoben werden, so dass der Messerhalter-Andrückkörper 32 um die rückwärtige Andrückkörper-Schwenkachse 301 etwas aufgeschwenkt wird und sich die rückwärtige Andrückkörper-Schwenkachse 301 längs der linearen Führungsbahn 61 zur Mitnehmerwalze 2 hin verlagert. Zweckmäßig sind die Füße der rückwärtigen Zugspalteinstellelemente 72 Gleitfüße, die entlang der Führungsbahnen 61, die zum Beispiel mit Gleitbelag versehen sind, gleiten. Bereits eine geringe Verkleinerung des stumpfen Winkels s jedes Gelenkedreiecks führt zu einer signifikanten Verkürzung der Hypotenuse des Gelenkedreiecks, also der Strecke zwischen der Lenkerschwenkachse 650 und der rückwärtigen Andrückkörper-Schwenkachse 301 bzw. den entsprechenden Aufstandspunkten der Zugspalteinstellelemente 72.

Der den stumpfen Winkel s verändernde Schwenkbereich zwischen dem Messerhalter-Andrückkörper 32 und dem Kopfende der Längslenkers 651 ist in beide Richtungen begrenzt. Im Ausführungsbeispiel wird die Begrenzung jeweils durch ein Winkelstück 656 gebildet, das mit einem Schenkel, der sich unterhalb des Längslenkers 651 erstreckt, an dem Messerhalter-Andrückkörper 32 festgesetzt ist, und dessen anderer rechtwinklig abgebogener Schenkel den Längslenker 651 mit einem Langloch 657 quert, durch dass der Längslenker 651 mit Spiel um die Lenkerschwenkachse 650 hindurchgreift. Das Spiel des Langlochs 657 ist so bemessen, dass in der in Fig. 1 bis 3 dargestellten Anfangsposition 300 des Messerhalter-Andrückkörpers 32 Spiel sowohl zum Vergrößern, als auch zum Verkleinern des stumpfen Winkels s vorhanden ist. Die Langlöcher 657 der beiden Winkelstücke 656 belassen auch Spiel in Vorrichtungsquerrichtung, um einen entsprechenden Raumbewegungsbereich des Messerhalter-Andrückkörpers 32 in Querrichtungen zuzulassen.

Im Ausführungsbeispiel ist jeweils die Druckfeder 41 so angeordnet und ausgerichtet, dass sie den Messerhalter-Andrückkörper 32, in Längsrichtung der Vorrichtung 1 betrachtet, in einem Bereich mit Andrückkraft beaufschlagt, der von der verlagerbaren rückwärtigen Schwenkachse 301 des Messerhalter-Andrückkörpers 32 weiter als von der Schneide des Trennmessers 31 des Messerhalter-Andrückkörpers 32 distanziert ist.

Jede Druckfeder 41 ist mit Spiel über einen sie durchsetzenden Haltekern derart gesetzt, dass sie der Verlagerungsbewegung der Schwenkfüße der Zugspalt-Einstellelemente 72 folgt. Allgemein wird erfindungsgemäß sichergestellt, dass die gezielte Verlagerungsbewegung der rückwärtigen Andrückkörper-Schwenkachse 301 durch Elemente, die den Messerhalter-Andrückkörper 32 mit Andrückkraft gegen die Mitnehmerwalze 2 beaufschlagen, nicht gesperrt wird.

Man erkennt, dass, wie anhand des Ausführungsbeispiels beispielhaft beschrieben, der Messerhalter-Andrückkörper 32 aus seiner mit der Zugspalt-Einstelleinrichtung 7 einstellbaren definierten Anfangsposition 300 unter Einwirkung von der Andrückkraft der Andrückeinrichtung 4 entgegengesetzter Kraft einerseits selbsttätig schwenkbar um die zur Mitnehmerwalze 2 lose verlagerbare rückwärtige Andrückkörper-Schwenkachse 301 und andererseits selbsttätig von den die Schwenkachsenverlagerung führenden Führungsbahnen 61 abhebbar gehalten ist.

Im Folgenden werden die Funktion der erfindungsgemäßen Vorrichtung 1 bzw. das erfindungsgemäße Verfahren, das sich zum Beispiel mit der im Ausführungsbeispiel beschriebenen Vorrichtung ausführen lässt, beschrieben.

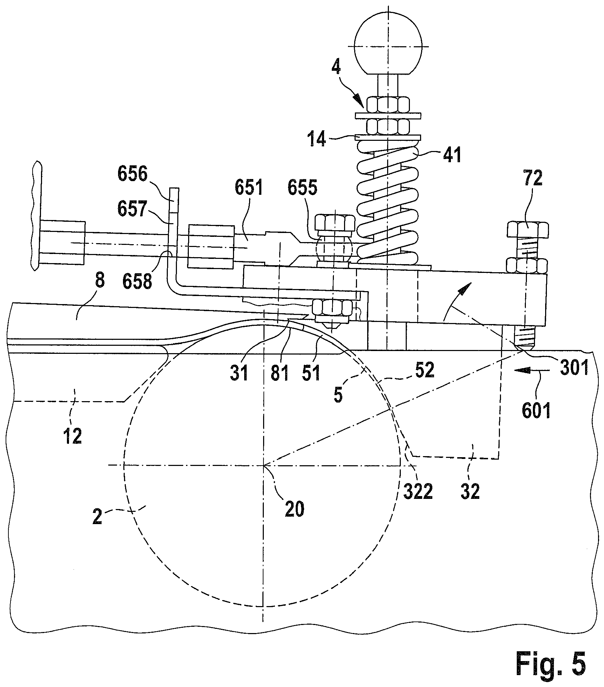

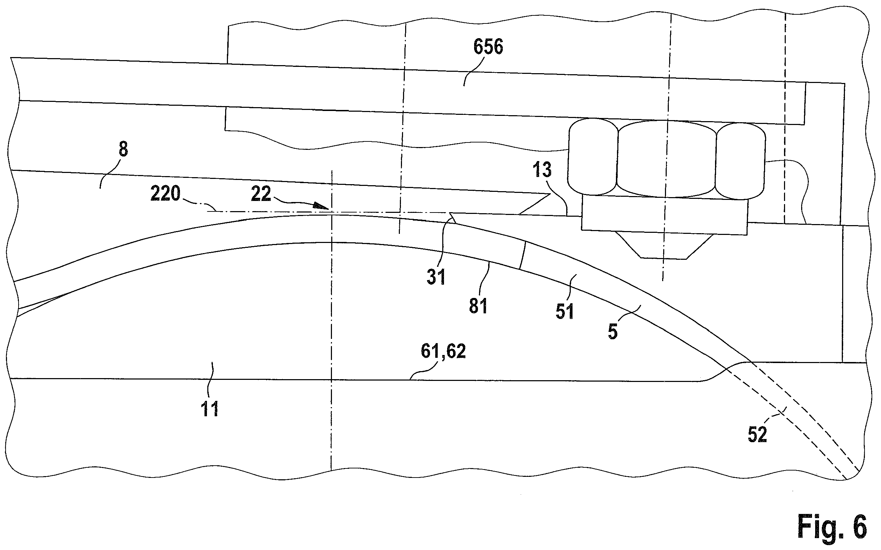

Zunächst wird der Messerhalter-Andrückkörper 32 mittels der Zugspalt-Einstelleinrichtung 7 durch Einstellen und Justieren der Zugspalt-Einstellelemente 71, 72 in eine definierte horizontale Anfangsposition 300 gesetzt, in der zwischen der Mitnehmerwalze 2 und dem Messerhalter-Andrückkörper 32 zunächst ein Zugspalt 5 von zumindest im Wesentlichen gleicher Größe eingerichtet wird (Fig. 3). Erreicht ein mit seiner Hautseite auf dem Tisch 12 aufliegendes und mit nicht dargestellten Mitteln herangefördertes Fischfilet (Nahrungsmittelprodukt 8) Schwanz voraus die Messereinrichtung 3, wird das Fischfilet gegen die Messerschneide des Trennmessers 31 sowie unter dieses gedrückt. Dadurch entsteht ein Prozessspalt, der an der Stelle der Messerschneide zum Beispiel von 0,35 auf 2,4 mm aufgedrückt wird. Damit geht ein Aufschwenken um die rückwärtige Andrückkörper-Schwenkachse 301 von zum Beispiel ca. 1,5°, ein gleichzeitiges Hochschwenken jedes Längslenkers 651 um ca. 0,5° und ein Verschieben des Messerhalter-Andrückkörpers 32 gegen die Produktlaufrichtung 101 um ca. 0,8 mm einher. Zudem schließt sich der Zugspalt 5 am, in Arbeitsdrehrichtung 201 der Mitnehmerwalze 2 betrachtet, hinteren Spaltende von zum Beispiel 0,5 mm auf nahezu Null. Für diesen Vorgang beim Verkleinern des Winkels s ist die Schwenkbegrenzung mittels des Winkelstücks 656 von Bedeutung. Die Einstellung erfolgt so, dass die räumliche Schwenkbewegung gesperrt wird, wenn der Austrittsspalt am hinteren Ende ein Minimum erreicht. Es findet dann in der Einlaufphase temporär ein Hochschwenken des Messerhalter-Andrückkörpers 32 allein um die Lenker-Schwenkachse 650 statt. Im Weiteren Verlauf dringt die Haut (Oberflächenschicht 81) in den Prozessspalt ein, so dass das Muskelfleisch des Filets durch die Messerschneide von der Haut abgeschabt und über den Messerhalter-Andrückkörper 32 geführt und auf einer Fläche 13 abgeführt wird, wie dies in Fig. 5 und 6 zu sehen ist.

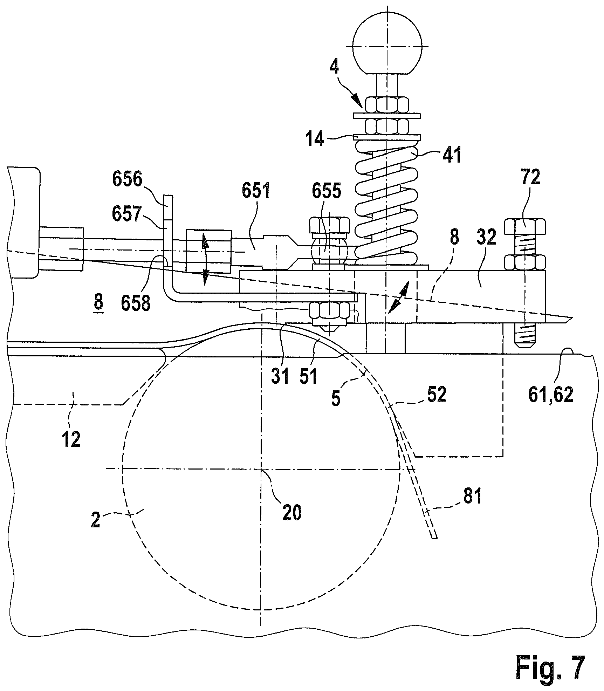

Der Zugspalt 5 wird zur Aufnahme der Oberflächenschicht so eingestellt, dass der Messerhalter-Andrückkörper 32 nach Maßgabe der Dicke der Oberflächenschicht 81 um die verlagerbare rückwärtige Schwenkachse 301 des Messerhalter-Andrückkörpers 32 derart aufgeschwenkt wird, dass dadurch der Einlaufbereich 51 des Zugspalts 5 selbsttätig erweitert wird und der Auslaufbereich 52 des Zugspalts 5 verengt wird. In dieser dynamischen Anfangsphase verlagert sich also die Schwenkachse 301 längs der Linearführung 62 in Richtung 601 zu der Mitnehmerwalze 2 hin. Beim weiteren Einlaufen der Oberflächenschicht in den Zugspalt 5 wird der Messerhalter-Andrückkörper 32 um die rückwärtige Andrückkörper-Schwenkachse 301 weiter aufgeschwenkt. Je nach Dicke der Oberflächenschicht 81 heben die rückwärtigen Zugspalt-Einstellelemente 72, also die die rückwärtige Schwenkanlenkung herstellenden Lagerelemente von den Führungsbahnen 61 ab. Das Abheben erfolgt allgemein dadurch, dass bei einem bestimmten verkleinerten Winkel s eine Anschlagposition zwischen dem Messerhalter-Andrückkörper 32 und der Lenkeinrichtung 65 bzw. deren Längslenkern 651 erreicht ist. Im Ausführungsbeispiel ist der Anschlag durch Anschlagen des unteren Randes 658 des Langlochs 657 gegen die Zugstange 652 hergestellt (Fig. 4 und 5). Weiteres Verkleinern des Winkels s wird gesperrt. Zum Beispiel wird am Raumgelenk 655 ein bis zum Anschlag freies Schwenken des Messerhalter-Andrückkörpers 32 um wenigstens 1,5° zugelassen. Durch das Anschlagen beim kleinsten vorgegebenen Einknickwinkel s findet eine sprunghafte Änderung der Anlenkung statt. Die Anlenkung mittels der rückwärtigen Schwenkachse 301 entfällt und vorübergehend erfolgt die Anlenkung um die Lenkerschwenkachse 650 mit steifer Verbindung zwischen den Längslenkern 651 und dem Messerhalter-Andrückkörper 32. Im weiteren Verlauf füllt die Oberflächenschicht 81 den Prozessspalt, nämlich den Zugspalt 5 vollständig aus und verlässt ihn am Auslaufende. Dadurch kippt der Messerhalter-Andrückkörper 32 in die in Fig. 7 dargestellte Position in gegensinnige Richtung, nämlich so, dass der Anschlag zwischen dem Messerhalter-Andrückkörper 32 und den Längslenkern 651 wieder beseitigt ist. Der Messerhalter-Andrückkörper schwimmt in freier Raumanlenkung auf der Oberflächenschicht 81 auf. Durch dieses Aufschwimmen bildet sich der Zugspalt 5 weitgehend gleich über seine Prozesslänge, jedoch nicht mit konstanter Größe aus (Fig. 7).

Zum Transportieren der Oberflächenschicht durch den Prozessspalt ist maximaler Kraftschluss erreicht. Der Messerhalter-Andrückkörper 32 wird in eine schwimmende oder fliegende Position derart versetzt, dass die Schwenkanlenkung durch die rückwärtige Andrückkörper-Schwenkachse 301 entfällt. Der Messerhalter-Andrückkörper 32 ist nur noch über die mit den Längslenkern 651 frei schwenkbewegbar angelenkte Raumgelenke 655 angelenkt. Der Prozessspalt weist aufgrund der schwimmbeweglichen Anlage eine sich an die transportierte Oberflächenschicht 81 selbsttätig anpassende Spaltgröße auf. Insoweit ist auch von Bedeutung, dass sich der Ort der Andrückkrafteinleitung der Andrückeinrichtung 4 mit der rückwärtigen Andrückkörper-Schwenkachse 301 entsprechend verlagert hat.

Ausgehend von der Anfangsposition 300 ist es erfindungsgemäß von Bedeutung, dass der aufschwenkende Messerhalter-Andrückkörper 32 zur Mitnehmerwalze 2 in Richtung 601 verlagert wird. Durch diese Verlagerung wird zunächst die Einengung im Zugspalt 2 in dessem Auslaufbereich 52 bewirkt. Dadurch wird die Oberflächenschicht 81 in der Einlaufphase besonders wirksam erfasst. Wesentlich ist dann, dass der Zugspalt 2 anschließend nicht in seinem Einlaufbereich 51 oder Auslaufbereich 52 ungleichförmig öffnet. Infolge der durch den beschriebenen Anschlag mehr oder weniger ruckartigen Anlenkbeseitigung an der rückwärtigen Seite des Messerhalter-Andrückkörpers 32 und dem anschließenden Zurückkippen in die Schwimmposition wird ein dynamischer Spalt mit der vergleichmäßigenden Andrückkrafteinleitung hergestellt ist.

Im Ausführungsbeispiel wandert, ausgehend von der Anfangsposition 300, eine Übergangsstelle 70, die man als Übergangsstelle zwischen dem Einlaufbereich und dem Auslaufbereich des Zugspalts 2 definieren kann, beim Aufschwenken um die verlagerbare rückwärtige Andrückkörper-Schwenkachse 301 gegen die Arbeitsdrehrichtung 201 der Mitnehmerwalze 2 an deren Mantelfläche 21 etwas nach oben. Allein dadurch ist die erfindungsgemäße Einzugsverengung erreicht. Zudem wird im Ausführungsbeispiel aber auch ein Abschnitt der Andrückkörper-Andrückfläche 321, der sich in Arbeitsdrehrichtung 201 an die sich dynamisch verlagernde Übergangsstelle 70 anschließt, zur Mitnehmerwalze 2 hin geschwenkt, wodurch gleichermaßen Einengung stattfindet. Daher kann der Auslaufbereich 52, wie im Ausführungsbeispiel mit einer tangentialen Fläche 322 ausgebildet sein, so dass in der Anfangsposition der Prozessspalt am hinteren Ende größer als am vorderen Ende ist. Im Beispiel geht die Andrückfläche 321 an der Übergangsstelle 70 in eine tangentiale Fläche 322 über, die den Auslauf der transportierten Oberflächenschicht 81 begünstigt.

Im Ausführungsbeispiel ist der Abstand 324 der Übergangsstelle 70 von der verlagerbaren rückwärtigen Andrückkörper-Schwenkachse 301 in der Größenordnung des Radius der Mitnehmerwalze 2 (Fig. 1). Mit dieser Anordnung sind besonders gute Ergebnisse erzielt worden. Die Übergangsstelle 70 liegt dann, ausgehend von dem dem Trennmesser 31 zugeordneten Zenit 22 der Mitnehmerwalze 2 und in deren Arbeitsdrehrichtung 201 betrachtet, bei einem Raumwinkel von ca. 75°.

Mit der erfindungsgemäßen Vorrichtung bzw. dem erfindungsgemäßen Verfahren wird allgemein erreicht, dass Bewegungen des Messerhalter-Andrückkörpers 32 selbsttätig mechanisch gesteuert in drei Bewegungs- und Haltebereiche getrennt werden. Im ersten Bereich überlagern sich Schwenkbewegungen um die rückwärtige Andrückkörper-Schwenkachse 301 und um die Raumgelenke 655 (Verlagerung der rückwärtigen Andrückkörper-Schwenkachse 301) (erster Schwenkzustand). Im zweiten Bereich erfolgt eine Anlenkung des Messerhalter-Andrückkörpers allein durch das fliegend bzw. lose gehaltene Raumgelenk 655 (schwimmende Position) (zweiter Schwenkzustand). Der Dritte Bereich bewirkt das Hochschwenken des Messerhalter-Andrückkörpers allein um die Lenkerschwenkachse 650 mit großem Schwenkradius. Dadurch wird der Übergang in den schwimmbeweglichen zweiten Zustand hergestellt. Gegebenenfalls dient der dritte Schwenkzustand auch dazu, die Verengung des Auslaufs des Prozessspalts zu begrenzen.

## Patentansprüche

1. Vorrichtung (1) zum Trennen einer Oberflächenschicht (81) von in Produktlaufrichtung (101) der Vorrichtung (1) förderbaren tierischen Nahrungsmittelprodukten (8), umfassend ein Gestell (11), eine angetriebene, eine strukturierte, kreiszylindrische Walzenmantelfläche (21) aufweisende Mitnehmerwalze (2), die um eine quer zur Produktlaufrichtung (101) über die Arbeitsbreite der Vorrichtung (1) in Vorrichtungsquerrichtung sich erstreckende Walzendrehachse (20) drehbar ist, umfassend eine der Mitnehmerwalze (2) gegenüberstehende Messereinrichtung (3) mit einem ein Trennmesser (31) haltenden Messerhalter-Andrückkörper (32), der sich mit der Mitnehmerwalze (2) über deren Zenitbereich und, in Produktlaufrichtung (101) betrachtet, in dem hinter der Mitnehmerwalze (2) liegenden Raum erstreckt, der eine der Walzenmantelfläche (21) entsprechende konkave Andrückfläche (321) aufweist und der um eine sich in der Vorrichtungsquerrichtung erstreckende Andrückkörper-Schwenkachse (301) schwenkbar ist, und umfassend eine Andrückkraft auf den Messerhalter-Andrückkörper (32) ausübende Andrückeinrichtung (4), wobei die Walzenmantelfläche (21) und die Andrückkörper-Andrückfläche (321) einen die durch das Trennmesser (31) abgetrennte Oberflächenschicht (81) transportierenden, im Arbeitsbetrieb selbsttätig veränderbaren Zugspalt (5) bilden, der einen Zugspalt-Einlaufbereich (51) und einen Zugspalt-Auslaufbereich (52) aufweist, wobei der Zugspalt (5) gegen die auf den Messerhalter-Andrückkörper (32) ausgeübte Andrückkraft in dem Zugspalt-Einlaufbereich (51) entsprechend der Dicke der eingezogenen Oberflächenschicht (81) selbsttätig geweitet wird, wobei die Andrückkörper-Schwenkachse als rückwärtige Schwenkachse (301) an der der Mitnehmerwalze (2) in Vorrichtungslängsrichtung abgewandten Seite des Messerhalter-Andrückkörpers (32) eingerichtet ist und Wobei die Vorrichtung (1) eine den Messerhalter-Andrückkörper (32) aus einer definierten Anfangsposition (300) selbsttätig verlagernde Andrückkörper-Führungseinrichtung (6) aufweist, mit der die rückwärtige Schwenkachse (301) des Messerhalter-Andrückkörpers (32), in Arbeitsdrehrichtung (201) der Mitnehmerwalze (2) betrachtet, im Raumbereich hinter dem Trennmesser (31) derart angeordnet und selbsttätig sowie mittels eines Fühtungsbahn (61) geführt verlagerbar ist, dass bei durch Einzug der Oberflächenschicht (81) gegen die Andrückkraft aufschwenkendem Messerhalter-Andrückkörper (32) der Zugspalt (5) im Einlaufbereich (51) weiter und im Auslaufbereich (52) enger wird und der Messerhalter-Andrückkörper (32) in Richtung gegen die Andrückkraft frei ausweichlich gehalten ist, so dass entlang des Zugspalts (5) eine schwimmbewegliche Anlage an die vollständig eingezogene Oberflächenschicht (81) unter Ausbildung eines Prozessspalts mit Andrückkraft vergleichmäßigender, sich auf die Dicke der Oberflächenschicht (81) selbsttätig anpassender Spaltgröße entsteht, wobei die Führungseinrichtung (6) so eingerichtet ist, dass der Messerhalter-Andrückkörper (32) bei der schwimmbeweglichen Anlage an die vollständig in den Zugspalt (5) eingezogene Oberflächenschicht (81) ohne Kontakt mit der Führungsbahn (61) gehalten ist, mittels der beim Aufschwenken des MesserhalterAndrückkörpers (32) aus seiner Anfangsposition (300) die rückwärtige Andrückkörper-Schwenkachse (301) geführt verlagerbar ist.

2. Vorrichtung nach Anspruch 1, **dadurch gekennzeichnet, dass** die Andrückkörper-Führungseinrichtung (6) eine an dem Vorrichtungsgestell (11) festgelegte Lenkeinrichtung (65) umfasst, die den Messerhalter-Andrückkörper (32) derart anlenkt, dass er, ausgehend von seiner Anfangsposition (300), beim selbsttätigen Aufschwenken, das durch Einlauf der abgetrennten Oberflächenschicht (81) in den Zugspalt (5) bewirkt ist, um die rückwärtige Schwenkachse (301) mit dieser in Längsrichtung der Vorrichtung (1) zur Mitnehmerwalze (2) hin begrenzt verlagerbar ist.

3. Vorrichtung nach Anspruch 2, **dadurch gekennzeichnet, dass** die Lenkeinrichtung (65) wenigstens einen Längslenker (651) umfasst, der sich längsverstellbar in Vorrichtungslänge erstreckt und um eine sich in Vorrichtungsquerrichtung erstreckende Lenker-Schwenkachse (650) frei schwenkbewegbar angelenkt ist.

4. Vorrichtung nach Anspruch 2 oder 3, **dadurch gekennzeichnet, dass** die Lenkeinrichtung (65) wenigstens einen Längslenker (651) umfasst, der am Längslenkerfuß (653) um eine sich in Vorrichtungsquerrichtung erstreckende gestellfeste Lenker-Schwenkachse (650) frei schwenkbar angelenkt ist und der am Längslenkerkopf (654) mittels eines Raumgelenks (655) mit dem Messerhalter-Andrückkörper (32) verbunden ist, wobei der Längslenker (651) so angeordnet ist, dass, im Zustand der Anfangsposition (300) des Messerhalter-Andrückkörpers (32), die Längslenker-Schwenkachse (650), das Raumgelenk (655) und die verlagerbare Andrückkörper-Schwenkachse (301) Eckpunkte eines gedachten, an dem Raumgelenk (655) stumpfwinkligen Gelenkedreiecks sind, das so eingerichtet ist, dass, ausgehend von der Anfangspositon (300) des Messerhalter-Andrückkörpers (32), beim durch Einlauf der abgetrennten Oberflächenschicht (81) im Zugspalt (5) bewirkten selbsttätigen Aufschwenken des Messerhalter-Andrückkörpers (32) um die verlagerbare rückwärtige Andrückkörper-Schwenkachse (301) der zur Mitnehmerwalze (2) offene stumpfe Winkel (s) des Gelenkedreiecks bis zu einem begrenzenden Winkelanschlag zwischen dem Längslenker (651) und dem Messerhalter-Andrückkörper (32) kleiner wird.

5. Vorrichtung nach einem der Ansprüche 2 bis 4, **dadurch gekennzeichnet, dass** die Lenkeinrichtung (65) zwei Längslenker (651) umfasst, wobei jedem Längsende des Messerhalter-Andrückkörpers (32) ein Längslenker (651) zugeordnet ist.

6. Vorrichtung nach einem der Ansprüche 1 bis 5, **dadurch gekennzeichnet, dass** die Andrückeinrichtung (4) so angeordnet und ausgebildet ist, dass sie den Messerhalter-Andrückkörper (32), in Längsrichtung der Vorrichtung (1) betrachtet, in einem Bereich mit Andrückkraft beaufschlagt, der von der verlagerbaren rückwärtigen Schwenkachse (301) des Messerhalter-Andrückkörpers (32) weiter als von dem Trennmesser (31) des Messerhalter-Andrückkörpers (32) distanziert ist.

7. Vorrichtung nach einem der Ansprüche 1 bis 6, **dadurch gekennzeichnet, dass** die Andrückkörper-Führungseinrichtung (6) eine Linearführung (62) umfasst, die wenigstens eine die verlagerbare rückwärtige Schwenkachse (301) des Messerhalter-Andrückkörpers (32) in Vorrichtungslänge linear verlagernde Führungsbahn (61) bildet.

8. Vorrichtung nach Anspruch 7, **dadurch gekennzeichnet, dass** die Linearführung (62) zumindest im Wesentlichen parallel zur Zenitebene (220) des dem Trennmesser (31) zugeordneten Zenits (22) der Mitnehmerwalze (2) gerichtet ist.

9. Vorrichtung nach einem der Ansprüche 1 bis 8, **dadurch gekennzeichnet, dass** die Vorrichtung (1) eine Zugspalt-Einstelleinrichtung (7) umfasst, mit der eine die Anfangsposition (300) des Messerhalter-Andrückkörpers (32) definierende wählbare feste Anfangsgröße des Zugspalts (5) einstellbar ist.

10. Vorrichtung nach Anspruch 9, **dadurch gekennzeichnet, dass** die Zugspalt-Einstelleinrichtung (7) wenigstens ein Auslauf-Zugspalteinstellelement (72) umfasst, das an dem Vorrichtungsgestell (11) abgestützt ist, wobei es eine Grenzlage des Messerhalter-Andrückkörpers (32) zur Bildung der Anfangsgröße des Zugspalts (5) in seinem Auslaufbereich (52) bestimmt.

11. Vorrichtung nach Anspruch 10, **dadurch gekennzeichnet, dass** das wenigstens eine Auslauf-Zugspalteinstellelement (72) die rückwärtige Schwenkachsen-Schwenkanlenkung des Messerhalter-Andrückkörpers (32) bildet, wobei es schwenkbewegbar an einer gestellfesten Führungsbahn (61) der Andrückkörper-Führungseinrichtung (6) abgestützt ist.

12. Vorrichtung nach einem der Ansprüche 9 bis 11, **dadurch gekennzeichnet, dass** die Zugspalt-Einstelleinrichtung (7) wenigstens ein Einlauf-Zugspalteinstellelement (71) umfasst, das an dem Vorrichtungsgestell (11) abgestützt ist, wobei es eine Grenzlage des Messerhalter-Andrückkörpers (32) zur Bildung der Anfangsgröße des Zugspalts (5) in seinem Einlaufbereich (51) bestimmt.

13. Vorrichtung nach einem der Ansprüche 9 bis 12, **dadurch gekennzeichnet, dass** im Bereich jedes Längsendes des Messerhalter-Andrückkörpers (32) wenigstens ein Zugspalteinstellelement (71, 72) angeordnet ist, das den Messerhalter-Andrückkörper (32) jeweils an seinem zugehörigen Längsende gegen das Vorrichtungsgestell (11) zum Einstellen seiner Anfangsposition (300) abstützt.

14. Vorrichtung nach Anspruch 13, **dadurch gekennzeichnet, dass** an beiden Längsenden des Messerhalter-Andrückkörpers (32) jeweils zwei Zugspalteinstellelemente (71, 72) angeordnet sind, wobei jeweils ein in Bezug auf die Arbeitsdrehrichtung (201) der Mitnehmerwalze (2) vorderes Einlauf-Zugspaltenelement (71) die Anfangsgröße des Zugspalts (5) in seinem Einlaufbereich (51) und ein in Bezug auf die Arbeitsdrehrichtung (201) der Mitnehmerwalze (2) hinteres Auslauf-Zugspaltelement (72) die Anfangsgröße des Zugspalts (5) in seinem Auslaufbereich (52) bestimmt.

15. Vorrichtung nach einem der Ansprüche 9 bis 14, **dadurch gekennzeichnet, dass** an dem Messerhalter-Andrückkörper (32) angeordnete Zugspalteinstellelemente (71, 72) der Zugspalt-Einstelleinrichtung (7) entlang sich in Vorrichtungslängsrichtung erstreckender linearer Führungsbahnen (61) linear verschiebbar geführt und daran zum Einstellen der Anfangsgröße des Zugspalts (5) einstellbar abgestützt sind.

16. Vorrichtung nach einem der Ansprüche 1 bis 15, **dadurch gekennzeichnet, dass** die rückwärtige Schwenkachse (301) des Messerhalter-Andrückkörpers (32) durch zwei Lagerelemente (720) bestimmt ist, die an jedem Längsende des Messerhalter-Andrückkörpers (32) derart angeordnet sind, dass sie mit jeweils einer zugeordneten Führung der Andrückkörper-Führungseinrichtung (6) zum selbsttätigen Verlagern des Messerhalter-Andrückkörpers (32) zusammenwirken und im Arbeitsbetrieb außer Eingriff mit der Führung gelangen.

17. Vorrichtung nach einem der Ansprüche 1 bis 16, **dadurch gekennzeichnet, dass** die verlagerbare rückwärtige Schwenkachse (301) des Messerhalter-Andrückkörpers (32), ausgehend von dem dem Trennmesser (31) zugeordneten Zenit (22) der Mitnehmerwalze (2) und in deren Arbeitsdrehrichtung (201) betrachtet, in einem Raumwinkelbereich von 0° bis 80° angeordnet ist.

18. Vorrichtung nach einem der Ansprüche 1 bis 17, **dadurch gekenn**z**eichnet**, dass der Messerhalter-Andrückkörper (32) im die Form seiner Andrückfläche (321) bestimmenden Profilquerschnitt so gestaltet ist, dass im Zustand der Anfangsposition (300) des Messerhalter-Andrückkörpers (32) die Lage einer Übergangsstelle (70), an der der Zugspalt-Einlaufbereich (51) in den Zugspalt-Auslaufbereich (52) übergeht, durch den kleinsten Abstand (324) der Andrückkörper-Andrückfläche (321) von der verlagerbaren Andrückkörper-Schwenkachse (301) bestimmt ist.

19. Vorrichtung nach Anspruch 18, **dadurch gekennzeichnet, dass** die sich im Zugspalt-Auslaufbereich (52) erstreckende Andrückfläche (321) des Messerhalter-Andrückkörpers (32) an oder, in Arbeitsdrehrichtung der Mitnehmerwalze (2) betrachtet, hinter der Übergangsstelle (70) in eine zur konkaven Andrückfläche (321) des Messerhalter-Andrückkörpers (32) tangentiale Fläche (322) übergeht.

20. Vorrichtung nach Anspruch 18 oder 19, **dadurch gekennzeichnet, dass** im Zustand der Anfangsposition (300) des Messerhalter-Andrückkörpers (32) der Abstand der Übergangsstelle (70) von der verlagerbaren rückwärtigen Andrückkörper-Schwenkachse (301) einen Wert aus dem Bereich von ca. dem 0,5- bis 1,5-fachen des Radius der Mitnehmerwalze (2) aufweist.

21. Vorrichtung nach einem der Ansprüche 18 bis 20, **dadurch gekennzeichnet, dass** die Übergangstelle (70) zwischen dem Zugspalt-Einlaufbereich (51) und dem Zugspalt-Auslaufbereich (52), ausgehend von dem dem Trennmesser (31) zugeordneten Zenit (22) der Mitnehmerwalze (2) und in deren Arbeitsdrehrichtung (201) betrachtet, im Raumwinkelbereich von 0° bis 80° liegt.

22. Verfahren zum automatischen Trennen einer Oberflächenschicht (81) von geförderten tierischen Nahrungsmittelprodukten, unter Verwendung einer Vorrichtung (1) nach einem der Ansprüche 1 bis 21, durch Abtrennen der Oberflächenschicht (81) mittels eines Trennmessers (31) und Einziehen und Fördern der abgetrennten Oberflächenschicht mittels Zugspalt (5), der zwischen einer angetriebenen Mitnehmerwalze (2) und einem das Trennmesser (31) haltenden, zur Bildung des Zugspalts (5) in Richtung auf die Mitnehmerwalze (2) gedrückten Messerhalter-Andrückkörper (32) ausgebildet wird, Wobei Verfahrensschritte das in bestehen, dass zunächst der Messerhalter-Andrückkörper (32) in eine definierte Anfangsposition (300) zum Einstellen einer vorgegebenen festen Anfangsgröße des Zugspalts (5) gebracht wird, dass anschließend der Messerhalter-Andrückkörper (32)selbsttätig um eine verlagerbare, an der der Mitnehmerwalze (2) abgewandten Seite des Messerhalter-Andrückkörpers (32) eingerichtete rückwärtige Schwenkachse (301) des Messerhalter-Andrückkörpers (32) durch Einführen der abgetrennten Oberflächenschicht (81) in den Zugspalt (5) derart aufgeschwenkt wird, dass zugleich ein Einlaufbereich (51) des Zugspalts (5) geweitet und ein Auslaufbereich (52) des Zugspalts (5) verengt wird, wobei die rückwärtige Schwenkachse (301) des Messerhalter-Andrückkörpers (32), betrachtet in Arbeitsdrehrichtung (201) der Mitnehmerwalze (2), in einem Bereich hinter dem Zenit (22) der Mitnehmerwalze (2) zu dieser hin selbsttätig und geführt verlagert wird, und dass der Messerhalter-Andrückkörper (32) mit vollständigem Einzug der abgetrennten Oberflächenschicht (81) in den Zugspalt (5) in schwimmender, ausweichlicher Arbeitsposition zum selbsttätigen Herstellen und Aufrechterhalten einer Andrückkraft vergleichmäßigenden Größe des Zugspalts (5) nach selbsttätiger Aufhebung der Schwenkposition und -funktion der verlagerten rückwärtigen Andrückkörper-Schwenkachse (301) gehalten wird.

23. Verfahren nach Anspruch 22, **dadurch gekennzeichnet, dass** die selbsttätige Verlagerung der rückwärtigen Andrückkörper-Schwenkachse (301) zu der Mitnehmerwalze (2) hin durch Überlagerung von durch zwei Schwenkanlenkungen des Messerhalter-Andrückkörpers (32) erzeugten Schwenkbewegungen bewirkt wird, wobei die eine Schwenkbewegung durch Schwenken des Messerhalter-Andrückkörpers (32) um die sich verlagernde rückwärtige Schwenkachse (301) ausgeführt wird und die andere Schwenkbewegung durch Schwenken des Messerhalter-Andrückkörpers (32) mittels eines vorzugsweise räumlichen Schwenkgelenks (655) erfolgt, das zwischen einer der Mitnehmerwalze (2) zugewandten vorderen Seite des Messerhalter-Andrückkörpers (32) und dem kopfseitigen Ende eines Lenkarms (651) angeordnet ist, der um eine gestellfeste, mit der Drehachse (20) der Mitnehmerwalze (2) parallele Lenkerschwenkachse (650) schwenkbar ist.

24. Verfahren nach Anspruch 23, **dadurch gekennzeichnet, dass** durch selbsttätige Verstellung ein der Mitnehmerwalze (2) zugewandter stumpfer Gelenkwinkel (s), unter dem der Messerhalter-Andrückkörper (32) an den Lenkarm (651) beim Schwenken um die rückwärtige, sich verlagernde Schwenkachse (301) angelenkt ist, verkleinert wird, um die Verlagerung der rückwärtigen Schwenkachse (301) zur Mitnehmerwalze (2) hin zu bewirken.

25. Verfahren nach Anspruch 24, **dadurch gekennzeichnet, dass** das Schwenken des Messerhalter-Andrückkörpers (32) um die rückwärtige, sich verlagernde Schwenkachse (301) durch einen vorgegebenen Anschlag begrenzt wird, der das Verkleinern des stumpfen Winkels (s) begrenzt, wodurch der Messerhalter-Andrückkörper (32) in eine Position gebracht wird, in der die Schwenkanlenkung um die rückwärtige Schwenkachse (301) wirkungslos wird.

26. Verfahren nach einem der Ansprüche 22 bis 25, **dadurch gekenn-zeichnet,** dass die sich verlagernde rückwärtige Andrückkörper-Schwenkachse (301) linear geführt auf die Mitnehmerwalze (2) hin verlagert wird.

## Claims

1. Apparatus (1) for separating a surface layer (81) from animal food products (8) conveyable in the product transport direction (101) of the apparatus (1), comprising a frame (11), a driven carrier roller (2) having a structured, cylindrical roller circumferential surface (21), which is rotatable around a roller rotational axis (20) extending transversally to the product transport direction (101) over the working width of the apparatus (1), comprising a cutting device (3) which is opposite the carrier roller (2) with a blade holder pressure body (32) holding the separating blade (31), which extends with the carrier roller (2) over its zenith area and, seen from the product transport direction, in the space lying behind the carrier roller (2), which has a concave pressing surface (321) corresponding with the roller circumferential surface (21) and which is pivotable around a pressure body pivoting axis (301) extending in the apparatus transverse direction, and comprising a pressure device (4) exerting a pressing force on the blade holder pressure body (32), wherein the roller circumferential surface (21) and the pressure body pressing surface (321) form a traction gap (5) transporting the separated surface layer (81) through the separating blade (31) and automatically changeable in working mode, which has a traction gap inlet area (51) and a traction gap outlet area (52), wherein the traction gap (5) is automatically widened against the pressing force exerted on the blade holder pressure body (32) in the traction gap inlet area (51) according to the thickness of the pulled in surface layer (81), wherein the pressure body pivoting axis is set up as a rear pivoting axis (301) on the side of the blade holder pressure body (32) facing away from the carrier roller (2) in the apparatus longitudinal direction and wherein the apparatus (1) has a pressure body guiding device (6) automatically shifting the blade holder pressure body (32) out of a defined initial position (300) with which the rear pivoting axis (301) of the blade holder pressure body (32), seen in the working rotation direction (201) of the carrier roller (2), is arranged in the area behind the separating blade (31) and is automatically, as well as by means of a guide track (61) guidably shiftable such that in the case of the carriage of the surface layer (81) against the pressing force of the pivoting up blade holder pressure body (32), the traction gap (5) becomes wide in the inlet area (51) and narrower in the outlet area (52) and the blade holder pressure body (32) is held freely yieldable in the direction against the pressing force so that along the traction gap (5) a floating application occurs against the completely pulled in surface layer (81) under formation of a process gap with a gap size homogenizing the pressing force and automatically adjusting to the thickness of the surface layer (81), wherein the guiding device (6) is set up such that the blade holder pressure body (32) in the case of the floating application on the surface layer (81) fully pulled into the traction gap (5) is held without contact with the guide track (61), by means of which the rear pressure body pivoting axis (301) is guided shiftably during the pivoting up of the blade holder pressure body (32) out of its initial position (300).

2. Apparatus according to claim 1, **characterized in that** the pressure body guiding device (6) comprises a steering device (65) fixed on the apparatus frame (11), which links the blade holder pressure body (32) such that it, starting from its initial position (300), during automatic pivoting up, which is effectuated through inlet of the separated surface layer (81) into the traction gap (5), is restrictively shiftable around the rear pivoting axis (301) with it in the longitudinal direction of the apparatus (1) towards the carrier roller (2).

3. Apparatus according to claim 2, **characterized in that** the steering device (65) comprises at least one longitudinal guide (651), which extends in a longitudinally adjustable manner in the apparatus length and is linked freely pivotably around a guide pivoting axis (650) extending in the apparatus transverse direction.

4. Apparatus according to claim 2 or 3, **characterized in that** the steering device (65) comprises at least one longitudinal guide (651), which is linked in a freely pivotable manner on the longitudinal guide foot (653) around a fixed-frame guide pivoting axis (650) extending in the apparatus transverse direction and which is connected on the longitudinal guide head (654) with the blade holder pressure body (32) by means of a space joint (655), wherein the longitudinal guide (651) is arranged such that in the state of the initial position (300) of the blade holder pressure body (32), the longitudinal guide pivoting axis (650), the space joint (655) and the shiftable pressure body pivoting axis (301) are corner points of an imaginary obtuse joint triangle on the space joint (655), which is set up such that, starting from the initial position (300) of the blade holder pressure body (32), in the case of the automatic pivoting up of the blade holder pressure body (32) caused by the inlet of the separated surface layer (81) in the traction gap (5) around the shiftable rear pressure body pivoting axis (32) the obtuse angle (s) of the joint triangle open towards the carrier roller (2) becomes narrower up to a restricting angle stop between the longitudinal guide (651) and the blade holder pressure body (32).

5. Apparatus according to any one of claims 2 to 4, **characterized in that** the steering device (65) comprises two longitudinal guides (651), wherein a longitudinal guide (651) is assigned to each longitudinal end of the blade holder pressure body (32).

6. Apparatus according to any one of claims 1 to 5, **characterized in that** the pressing device (4) is arranged and designed such that it supplies the blade holder pressure body (32), seen in the longitudinal direction of the apparatus (1), with pressing force in an area, which is distanced from the shiftable rear pivoting axis (301) of the blade holder pressure body (32) further than from the separating blade (31) of the blade holder pressure body (32).

7. Apparatus according to any one of claims 1 to 6, **characterized in that** the pressure body guiding device (6) comprises a linear guide (62), which forms at least one guide track (61) linearly shifting the shiftable rear pivoting axis (301) of the blade holder pressure body (32) in the apparatus length.

8. Apparatus according to claim 7, **characterized in that** the linear guide (62) is directed at least mainly parallel to the zenith plane (220) of the zenith (22) of the carrier roller (2) assigned to the separating blade (31).

9. Apparatus according to any one of claims 1 to 8, **characterized in that** the apparatus (1) comprises a traction gap setting device (7), with which a selectable, fixed initial size of the traction gap (5) defining the initial position (300) of the blade holder pressing body (32) can be set.

10. Apparatus according to claim 9, **characterized in that** the traction gap setting device (7) comprises at least one outlet traction gap setting element (72), which is supported on the apparatus frame (11), wherein it determines a boundary position of the blade holder pressure body (32) for the formation of the initial size of the traction gap (5) in its outlet area (52).

11. Apparatus according to claim 10, **characterized in that** the at least one outlet traction gap setting element (72) forms the rear pivoting axis pivot linkage of the blade holder pressure body (32), wherein it is supported pivotably on a fixed-frame guide track (61) of the pressure body guiding device (6).

12. Apparatus according to any one of claims 9 to 11, **characterized in that** the traction gap setting device (7) comprises at least an inlet traction gap setting element (71), which is supported on the apparatus frame (11), wherein it determines a boundary position of the blade holder pressure body (32) for the formation of the initial size of the traction gap (5) in its inlet area (51).

13. Apparatus according to any one of claims 9 to 12, **characterized in that** in the area of each longitudinal end of the blade holder pressure body (32) at least one traction gap setting element (71, 72) is arranged, which supports the blade holder pressure body (32) respectively on its associated longitudinal end against the apparatus frame (11) for the setting of its initial position (300).

14. Apparatus according to claim 13, **characterized in that** two traction gap setting elements (71, 72) are arranged on both longitudinal ends of the blade holder pressure body (32), wherein respectively an inlet traction gap element (71) in the front with respect to the working rotation direction (201) of the carrier roller (2) determines the initial size of the traction gap (5) in its inlet area (51) and an outlet traction gap element (72) in the back with respect to the working rotation direction (201) of the carrier roller (2) determines the initial size of the traction gap (5) in its outlet area (52).

15. Apparatus according to any one of claims 9 to 14, **characterized in that** traction gap setting elements (71, 72) of the traction gap setting device (7) arranged on the blade holder pressure body (32) are guided in a linearly shiftable manner along linear guide tracks (61) extending in the apparatus longitudinal direction and are adjustably supported on it for setting the initial size of the traction gap (5).

16. Apparatus according to any one of claims 1 to 15, **characterized in that** the rear pivoting axis (301) of the blade holder pressure body (32) is determined by two bearing elements (720), which are arranged on each longitudinal end of the blade holder pressure body (32) such that they each work together with an assigned guide of the pressure body guiding device (6) for the automatic shifting of the blade holder pressure body (32) and disengage from the guide in working mode.

17. Apparatus according to any one of claims 1 to 16, **characterized in that** the shiftable rear pivoting axis (301) of the blade holder pressure body (32), starting from the zenith (22) of the carrier roller (2) assigned to the separating blade (31) and seen in its working rotation direction (201), is arranged in a solid angle range from 0° to 80°.

18. Apparatus according to any one of claims 1 to 17, **characterized in that** the blade holder pressure body (32) in the profile cross-section determining the shape of its pressing surface (321) is designed such that in the state of the initial position (300) of the blade holder pressure body (32) the position of a transition point (70), where the traction gap inlet area (51) transitions into the traction outlet area (52), is determined by the smallest distance (324) between the pressure body pressing surface (321) and the shiftable pressure body pivoting axis (301).

19. Apparatus according to claim 18, **characterized in that** the pressing surface (321) of the blade holder pressure body (32) extending in the traction gap outlet area (52) transitions into a surface (32) tangential to the concave pressing surface (321) of the blade holder pressure body (32) at or, seen in the working rotation direction of the carrier roller (2), behind the transition point (70).

20. Apparatus according to claim 18 or 19, **characterized in that** the in the state of the initial position (300) of the blade holder pressure body (32) the distance between the transition point (70) and the shiftable rear pressure body pivoting axis (301) has a value in the range of approx. 0.5 to 1.5 times the radius of the carrier roller (2).

21. Apparatus according to any one of claims 18 to 20, **characterized in that** the transition point (70) between the traction gap inlet area (51) and the traction point outlet area (52), starting from the zenith (22) of the carrier roller (2) assigned to the separating blade (31) and seen in its working rotation direction (201), is arranged in a solid angle range from 0° to 80°.

22. Method for automatically separating a surface layer (81) from conveyed animal food products using an apparatus (1) according to any one of claims 1 to 21, by separating the surface layer (81) by means of a separating blade (31) and pulling in and conveying the separated surface layer by means of a traction gap (5), which is designed between a driven carrier roller (2) and a blade holder pressure body (32) holding the separating blade (31) and pressed for formation of the traction gap (5) in the direction of the carrier roller (2), wherein method steps consist in that first the blade holder pressure body (32) is brought into a defined initial position (300) for setting a specified fixed initial size of the traction gap (5), that then the blade holder pressure body (32) is pivoted up around a shiftable rear pivoting axis (301) of the blade holder pressure body (32) set up on the side of the blade holder pressure body (32) facing away from the carrier roller (2) through inlet of the separated surface layer (81) into the traction gap (5) such that at the same time an inlet area (51) of the traction gap (5) is widened and an outlet area (52) of the traction gap (5) is narrowed, wherein the rear pivoting axis (301) of the blade holder pressure body (32), as seen in the working rotation direction (201) of the carrier roller (2), in an area behind the zenith (22) of the carrier roller (2) is shifted automatically and controlled towards it, and such that the blade holder pressure body (32) is held with complete carriage of the separated surface layer (81) into the traction gap (5) in floating, yieldable working position for automatic creation and maintenance of a size of the traction gap (5) homogenizing a pressing force after automatic cancellation of the pivoting position and function of the shifted rear pressure body pivoting axis (301).

23. Method according to claim 22, **characterized in that** the automatic shifting of the rear pressure body pivoting axis (301) towards the carrier roller (2) is effectuated through overlapping of pivoting movements created by two pivoting linkages of the blade holder pressure body (32), wherein the one pivoting movement is executed by the pivoting of the blade holder pressure body (32) around the shifting rear pivoting axis (301) and the other pivoting movement takes place through the pivoting of the blade holder pressure body (32) by means of a preferably spatial pivoting joint (655), which is arranged between a front side of the blade holder pressure body (32) facing the carrier roller (2) and the head-side end of a steering arm (651), which is pivotable around a fixed-frame guide pivoting axis (650) parallel to the axis of rotation (20) of the carrier roller (2).

24. Method according to claim 23, **characterized in that**, through automatic adjustment, an obtuse joint angle (s) facing the carrier roller (2), under which the blade holder pressure body (32) is linked on the steering arm (651) during pivoting around the rear, shifting pivoting axis (301), is reduced, in order to cause the shifting of the rear pivoting axis (301) towards the carrier roller (2).

25. Method according to claim 24, **characterized in that** the pivoting of the blade holder pressure body (32) around the rear, shifting pivoting axis (301) is restricted by a specified stop, which restricts the reduction of the obtuse angle (s), whereby the blade holder pressure body (32) is brought into a position, in which the pivoting linkage around the rear pivoting axis (301) is ineffective.

26. Method according to any one of claims 22 to 25, **characterized in that** the shifting rear pressure body pivoting axis (301) is shifted in a linear guiding manner onto the carrier roller (2).

## Revendications

1. Un dispositif (1) pour séparer une tranche superficielle (81) de produits alimentaires (8) pour animaux pouvant être transportés dans le sens de déplacement des produits (101) du dispositif (1), comprenant un bâti (11), un rouleau de prélèvement (2) à entraînement ayant une structure d'enveloppe cylindrique circulaire (21), pouvant être tourné sur un axe de rotation des rouleaux (20) s'étendant transversalement par rapport au sens de déplacement des produits (101), sur toute la largeur du dispositif (1), comprenant un dispositif de coupe (3) placé face au rouleau de prélèvement (2) comportant un corps de maintien de couteau et de pression (32) retenant la lame de coupe (31), placé au sommet avec le rouleau de prélèvement (2) et dans l'espace se trouvant derrière le rouleau de prélèvement (2) si l'on se place dans le sens de déplacement du produit (101), disposant d'une surface de pression (321) correspondant à une structure d'enveloppe cylindrique (21) et pouvant pivoter autour d'un axe de pivotement de corps de pression (301) s'étendant transversalement par rapport au dispositif, et comprenant un dispositif presseur (4) exerçant une force de pression sur le corps de maintien de couteau et de pression (32), dans lequel la structure d'enveloppe cylindrique (21) et la surface de pression du corps de pression (321) forment un intervalle de traction (5) transportant la tranche superficielle (81) séparée par la lame de coupe (31) et automatiquement modifiable en mode de travail, lequel comprend une zone d'introduction de l'intervalle de traction (51) et une zone d'extraction de l'intervalle de traction (52), dans lequel l'intervalle de traction (5) est élargi automatiquement dans la zone d'introduction de l'intervalle de traction (51) en fonction de l'épaisseur de la tranche superficielle (81) introduite à l'encontre de la force de pression exercée sur le corps de maintien de couteau et de pression (32), dans lequel l'axe de pivotement du corps de pression est conçu comme un axe de pivotement arrière (301) disposée sur le côté du corps de maintien de couteau et de pression (32) situé à l'opposé du rouleau de prélèvement (2) selon l'axe longitudinal du dispositif, et dans lequel le dispositif (1) comprend un dispositif de guidage (6) du corps de pression déplaçant automatiquement à partir d'une position de départ (300) définie un corps de maintien de couteau et de pression (32), avec lequel l'axe de pivotement arrière (301) du corps de maintien de couteau et de pression (32) est disposé dans l'espace situé derrière la lame de coupe (31), si l'on se place dans le sens de rotation de fonctionnement (201) du rouleau de prélèvement (2), et peut être déplacé de façon guidée automatique ou par l'intermédiaire d'une glissière (61) de telle sorte que dans le cas du transport de la tranche superficielle (81) à l'encontre de la force de pression du corps de maintien de couteau et de pression (32) pivotant vers le haut, l'intervalle de traction (5) s'élargit dans une zone d'introduction (51) et se rétrécit dans une zone d'extraction (52) et le corps de maintien de couteau et de pression (32) est maintenu librement dans une direction à l'encontre de la force de pression de telle sorte que se produit le long de l'intervalle de traction (5) un positionnement à mouvement flottant sur la tranche superficielle (81) entièrement insérée sous l'effet de la production d'un intervalle de processus dont la force de pression dispose d'un effet d'homogénéisation et s'ajustant automatiquement à l'épaisseur de la tranche superficielle (81), dans lequel le dispositif de guidage (6) est conçu de façon à ce que le corps de maintien de couteau et de pression (32) soit maintenu sans contact avec la glissière (61) en cas de positionnement à mouvement flottant sur la tranche superficielle (81) entièrement insérée dans l'intervalle de traction (5), grâce à quoi l'axe de pivotement arrière (301) peut être déplacé de façon guidée durant le pivotement vers le haut du corps de maintien de couteau et de pression (32) quittant sa position de départ (300).

2. Un dispositif selon la revendication 1, **caractérisé en ce que** le dispositif de guidage du corps de pression (6) comprend un dispositif de direction (65) fixé sur le bâti (11) du dispositif, dirigeant le corps de maintien de couteau et de pression (32) de façon à ce qu'il puisse être déplacé de façon limitée autour de l'axe de pivotement arrière (301) et avec celui-ci vers le rouleau de prélèvement (2) dans la direction longitudinale du dispositif (1), après avoir pivoté automatiquement vers le haut en quittant sa position de départ (300) suite à l'introduction de la tranche superficielle (81) séparée dans l'intervalle de traction (5).

3. Un dispositif selon la revendication 2, **caractérisé en ce que** le dispositif de direction (65) comprend au moins un bras longitudinal (651) s'étendant sur la longueur du dispositif et pouvant être réglé longitudinalement, et étant lié à un axe de pivotement de bras (650) s'étendant dans la direction transversale du dispositif de façon à pouvoir être pivoté librement.

4. Un dispositif selon la revendication 2 ou 3, **caractérisé en ce que** le dispositif de direction (65) comprend au moins un bras longitudinal (651) lié de façon à pouvoir être pivoté librement au pied du bras longitudinal (653) autour d'un axe de pivotement de bras (650) solidaire du bâti et s'étendant dans la direction transversale du dispositif et lié au corps de maintien de couteau et de pression (32) au niveau de la tête du bras longitudinal (654) à l'aide d'une articulation spatiale (655), dans lequel le bras longitudinal (651) est agencé de telle façon que dans la position de départ (300) du corps de maintien du couteau et de pression (32) l'axe de pivotement du bras longitudinal (650), l'articulation spatiale (655) et l'axe de pivotement amovible du corps de pression (301) constituent les points d'angle d'un triangle d'articulation obtus imaginaire placé sur l'articulation spatiale (655) agencé de façon à ce que, en partant de la position de départ (300) du corps de maintien de couteau et de pression (32), en cas de pivotement automatique vers le haut du corps de maintien de couteau et de pression (32) provoqué par l'introduction de la tranche superficielle (81) dans l'intervalle de traction (5), autour de l'axe de pivotement mobile arrière du corps de pression (301), l'angle obtus (s) du triangle d'articulation ouvert en direction du rouleau de prélèvement (2) rétrécit jusqu'à une butée angulaire de limitation entre le bras longitudinal (651) et le corps de maintien de couteau et de pression (32).

5. Un dispositif selon l'une des revendications 2 à 4, **caractérisé en ce que** le dispositif de direction (65) comprend deux bras longitudinaux (651), dans lequel un bras longitudinal (651) est assigné à chaque extrémité longitudinale du corps de maintien de couteau et de pression (32).

6. Un dispositif selon l'une des revendications 1 à 5, **caractérisé en ce que** le dispositif presseur (4) est agencé de façon à fournir une pression au corps de maintien de couteau et de pression (32) considéré dans la direction longitudinale du dispositif (1), dans une zone se trouvant à une plus grande distance de l'axe de pivotement mobile arrière (301) du corps de maintien de couteau et de pression (32) que de la lame de coupe (31) du corps de maintien de couteau et de pression (32).

7. Un dispositif selon l'une des revendications 1 à 6, **caractérisé en ce que** le dispositif de guidage (6) du corps de pression comprend un guidage linéaire (62) formant au moins une glissière (61) mobile linéaire déplaçant linéairement l'axe de pivotement mobile arrière (301) du corps de maintien de couteau et de pression (32) sur la longueur du dispositif.

8. Un dispositif selon la revendication 7, **caractérisé en ce que** le guidage linéaire (62) est agencé au moins pour l'essentiel de façon parallèle au point zénithal (220) du sommet (22) du rouleau de prélèvement (2) assigné à la lame de coupe (31).

9. Un dispositif selon l'une des revendications 1 à 8, **caractérisé en ce que** le dispositif comprend un dispositif (1) de réglage de l'intervalle de traction (7), à l'aide duquel il est possible de régler une dimension de départ fixe sélectionnable de l'intervalle de traction (5) définissant la position de départ (300) du corps de maintien de couteau et de pression (32).

10. Un dispositif selon la revendication 9, **caractérisé en ce que** le dispositif de réglage de l'intervalle de traction (7) comprend au moins un élément de réglage de l'intervalle de traction d'extraction (72) appuyé sur le bâti (11) du dispositif, définissant une position de limite du corps de maintien de couteau et de pression (32) pour former la dimension de départ de l'intervalle de traction (5) dans sa zone d'extraction (52).

11. Un dispositif selon la revendication 10, **caractérisé en ce que** le ou les éléments de réglage de l'intervalle de traction d'extraction (72) forment l'articulation de pivotement des axes de pivotement arrière du corps de maintien de couteau et de pression (32), laquelle repose de façon à pouvoir pivoter contre une glissière solidaire du bâti (61) du dispositif de guidage du corps de pression (6).

12. Un dispositif selon l'une des revendications 9 à 11, **caractérisé en ce que** le dispositif de réglage de l'intervalle de traction (7) comprend au moins un élément de réglage de l'intervalle de traction d'introduction (71) appuyé sur le bâti (11) du dispositif, définissant une position de limite du corps de maintien de couteau et de pression (32) pour former la dimension de départ de l'intervalle de traction (5) dans sa zone d'introduction (51).

13. Un dispositif selon l'une des revendications 9 à 12, **caractérisé en ce qu'**il y a au moins un élément de réglage de l'intervalle de traction (71, 72) dans la zone de chaque extrémité longitudinale du corps de maintien de couteau et de pression (32), soutenant le corps de maintien de couteau et de pression (32) au niveau de son extrémité longitudinale respective contre le bâti (11) du dispositif pour régler sa position de départ (300).

14. Un dispositif selon la revendication 13, **caractérisé en ce que** deux éléments de réglage de l'intervalle de traction (71, 72) se trouvent respectivement aux deux extrémités longitudinales du corps de maintien de couteau et de pression (32), dans lequel respectivement un élément de réglage de l'intervalle de traction d'introduction (71) définit la dimension de départ de l'intervalle de traction (5) dans sa zone d'introduction (51) en tenant compte du sens de rotation de fonctionnement (201) du rouleau de prélèvement (2) et un élément de réglage de l'intervalle de traction d'extraction (72) définit la dimension de départ de l'intervalle de traction (5) dans sa zone d'extraction (52) en tenant compte du sens de rotation de fonctionnement (201) du rouleau de prélèvement (2).

15. Un dispositif selon l'une des revendications 9 à 14, **caractérisé en ce que** les éléments de réglage de l'intervalle de traction (71, 72) agencés sur le corps de maintien de couteau et de pression (32) sont guidés de façon coulissante linéaire le long des glissières (61) linéaires s'étendant dans la direction longitudinale du dispositif et sont appuyés sur ce dernier de façon réglable pour assurer le réglage de la dimension de départ de l'intervalle de traction (5).

16. Un dispositif selon l'une des revendications 1 à 15, **caractérisé en ce que** l'axe de pivotement arrière (301) du corps de maintien de couteau et de pression (32) est défini par deux éléments de palier (720), agencés sur chaque extrémité longitudinale du corps de maintien de couteau et de pression (32) de façon à fonctionner avec un guidage assigné respectif du dispositif de guidage du corps de pression (6) pour déplacer automatiquement le corps de maintien de couteau et de pression (32) et se désolidariser du guidage en mode de fonctionnement.

17. Un dispositif selon l'une des revendications 1 à 16, **caractérisé en ce que** l'axe de pivotement mobile arrière (301) du corps de maintien de couteau et de pression (32), en partant du sommet (22) du rouleau de prélèvement (2) assigné à la lame de coupe (31) et considéré dans son sens de rotation de fonctionnement (201), est agencé dans une zone angulaire solide de 0° à 80°.

18. Un dispositif selon l'une des revendications 1 à 17, **caractérisé en ce que** le corps de maintien de couteau et de pression (32) dans la forme de sa section transversale de profil définissant sa surface de pression (321) est conçu de façon à ce que dans l'état correspondant à la position de départ (300) du corps de maintien de couteau et de pression (32) la position d'un point de transition (70), dans lequel la zone d'introduction (51) de l'intervalle de traction se transforme en zone d'extraction (52) de l'intervalle de traction, soit déterminée par la plus petite distance (324) entre la surface de pression (321) du corps de pression et l'axe de pivotement du corps de pression (301).

19. Un dispositif selon la revendication 18, **caractérisé en ce que** la surface de pression (321) s'étendant dans la zone d'extraction (52) de l'intervalle de traction du corps de maintien de couteau et de pression (32) se transforme en une surface tangentielle (322) à la surface de pression concave (321) du corps de maintien de couteau et de pression (32) au niveau du point de transition (70) ou, considéré dans le sens de rotation de fonctionnement du rouleau de prélèvement (2), derrière ce point.

20. Un dispositif selon la revendication 18 ou 19, **caractérisé en ce que** dans l'état de la position de départ (300) du corps de maintien de couteau et de pression (32), l'écart entre le point de transition (70) et l'axe de pivotement mobile arrière du corps de pression (301) dispose d'une valeur comprise dans une plage d'env. 0,5 à 1,5 fois le rayon du rouleau de prélèvement (2).

21. Un dispositif selon l'une des revendications 18 à 20, **caractérisé en ce que** le point de transition (70) entre la zone d'introduction de l'intervalle de traction (51) et la zone d'extraction de l'intervalle de traction (52), en partant du sommet (22) du rouleau de prélèvement (2) assigné à la lame de coupe (31) et considéré dans son sens de rotation de fonctionnement (201), est agencé dans une zone angulaire solide de 0° à 80°.

22. Un procédé de séparation automatique d'une tranche superficielle (81) de produits alimentaires pour animaux transportés, faisant usage en particulier d'un dispositif (1) selon l'une des revendications 1 à 21, assurant la séparation de la tranche superficielle (81) à l'aide de lames de coupe (31) et par l'introduction et le transport de la tranche superficielle à l'aide d'un intervalle de traction (5) formé entre un rouleau de prélèvement (2) à entraînement et un corps de maintien de couteau et de pression (32) maintenant la lame de coupe (31) et appuyé pour former l'intervalle de traction (5) dans le sens du rouleau de prélèvement (2), dans lequel les étapes de la procédure comprennent d'abord le placement du corps de maintien de couteau et de pression (32) dans une position de départ (300) définie de façon à régler une dimension de départ fixe prédéterminée de l'intervalle de traction (5), puis le pivotement automatique du corps de maintien de couteau et de pression (32) autour d'un axe de pivotement arrière (301) du corps de maintien de couteau et de pression (32) positionné sur le côté du corps de maintien de couteau et de pression (32) ne faisant pas face au rouleau de prélèvement (2) sous l'effet de l'insertion de la tranche superficielle (81) séparée dans l'intervalle de traction (5), de façon à provoquer simultanément l'élargissement d'une zone d'introduction (51) de l'intervalle de traction (5) et le rétrécissement d'une zone d'extraction (52) de l'intervalle de traction (5), dans lequel l'axe de pivotement arrière (301) du corps de maintien de couteau et de pression (32) considéré dans le sens de rotation de fonctionnement (201) du rouleau de prélèvement (2) est déplacé automatiquement et de façon guidée dans une zone se trouvant derrière le sommet (22) du rouleau de prélèvement (2) et vers ce dernier, et dans lequel le corps de maintien de couteau et de pression (32) est maintenu dans une position de travail flottante variable suite à l'introduction complète de la tranche superficielle (81) dans l'intervalle de traction (5), de façon à produire automatiquement et à maintenir une dimension de l'intervalle de traction (5) assurant un effet d'homogénéisation de la force de pression après la suppression automatique de la position et fonction de pivotement de l'axe de pivotement mobile arrière du corps de pression (301).

23. Un procédé selon la revendication 22, **caractérisé en ce que** le déplacement automatique de l'axe de pivotement arrière du corps de pression (301) vers le rouleau de prélèvement (2) est provoqué par les mouvements de pivotement engendrés par deux articulations de pivotement du corps de maintien de couteau et de pression (32), dans lequel l'un des mouvements de pivotement est causé par le pivotement du corps de maintien de couteau et de pression (32) autour de l'axe de pivotement arrière (301) se déplaçant et l'autre mouvement de pivotement est causé par le pivotement du corps de maintien de couteau et de pression (32) par l'intermédiaire d'une articulation préférentiellement spatiale (655) placée entre une face avant du corps de maintien de couteau et de pression (32) orientée vers le rouleau de prélèvement (2) et l'extrémité de tête d'un bras de pivotement (651), pouvant être pivoté autour d'un axe de pivotement de bras (650) solidaire du bâti parallèle à l'axe de rotation (20) du rouleau de prélèvement (2).

24. Un procédé selon la revendication 23, **caractérisé en ce que** le déplacement automatique provoque la réduction d'un angle obtus (s) orienté vers le rouleau de prélèvement (2), sous lequel le corps de maintien de couteau et de pression (32) est lié au bras de pivotement (651) durant le pivotement autour de l'axe de pivotement mobile arrière (301), afin de provoquer le déplacement de l'axe de pivotement arrière (301) autour du rouleau de prélèvement (2).

25. Un procédé selon la revendication 24, **caractérisé en ce que** le pivotement du corps de maintien de couteau et de pression (32) autour de l'axe de pivotement mobile arrière (301) est limité par une butée prédéfinie, limitant la réduction de l'angle obtus (s), dans lequel le corps de maintien de couteau et de pression (32) est déplacé jusqu'à une position dans laquelle l'articulation de pivotement autour de l'axe de pivotement arrière (301) devient inefficace.

26. Un procédé selon l'une des revendications 22 à 25, **caractérisé en ce que** l'axe de pivotement mobile arrière du corps de pression (301) est déplacé linéairement sur le rouleau de prélèvement (2).
